# EUROPEAN PATENT SPECIFICATION

(11) **EP 3 980 475 B1**
(45) Date of publication and mention of the grant of the patent: **24.05.2023**
(21) Application number: 20736765.7
(22) Date of filing: 05.06.2020
(51) Int. Cl.: C08K 3/22, C11D 3/395, C08F 226/02, C11D 3/37

(54) **CLEANING COMPOSITION FOR HARD SURFACES**
REINIGUNGSZUSAMMENSETZUNG FÜR HARTE OBERFLÄCHEN
COMPOSITION DE NETTOYAGE POUR SURFACES DURES

(30) Priority: 05.06.2019 IT 201900008124
(43) Date of publication of application: 13.04.2022
(73) Proprietor: Fater S.p.A., 65010 Spoltore (PE) (IT)
(72) Inventor: RESTA, Stefano, 65129 Pescara (IT); GRANDE, Giovanni, 65129 Pescara (IT); TESORONE, Lorenzo, 65129 Pescara (IT); SARCINELLI, Luca, 65129 Pescara (IT)
(74) Representative: Casciano, Lidia Giulia Rita
(86) International application number: PCT/IB2020/055315
(87) International publication number: WO 2020/245788

(56) References cited:
- EP-A2- 0 467 472
- WO-A1-2018/095918

## Description

### TECHNICAL FIELD

The present invention relates to a cleaning composition for hard surfaces with improved gloss characteristics.

### BACKGROUND ART

Many hard surfaces used as coating in a home environment are inherently hydrophilic. These mainly include ceramic and china materials used, for example, for making floorings, bathrooms, sinks, and toilets, or glass surfaces such as mirrors, shower stalls, and windows. Some surfaces are also coated with materials having chemical nature similar to ceramic, such as for example varnishes or other kinds of coatings for home materials.

When such surfaces come into contact with water, for example following rinsing after cleaning or when used, a layer of water is formed thereon due to the hydrophilic interaction between the water and the surface.

The residual water, in the form of a homogeneous film or droplets, following evaporation leaves marks on the surface, which are commonly called "watermarks", caused by the deposit of salts dissolved in the water.

Following sustained applications, the marks extend up to turning sometimes into limescale deposits.

The result is the deterioration of the surface appearance, i.e., loss of gloss and an unpleasant appearance.

This phenomenon is well-known in the art. In fact, a certain number of molecules for preventing such problem are known, called surface modification chemicals, which make the treated surface slightly less hydrophilic so that the interaction with the surface is less pronounced and the water can dry more easily on the surface.

Typical examples of such compounds are polymeric substances among which the most known and used is polyvinylpyrrolidone (PVP).

PVP is commercially available and used in commercial products such as Viakal. Other molecules include polyacrylic acid derivatives, commercially available under the name Noverite or Acusol by Lubrizol or under the name Syntran by Interpolymer or still under the name Mirapol Surf by Solvay.

The main limitation of the above-mentioned polymers is that they are mainly suitable for being formulated into acid or neutral pH compositions. Some of them can be used also at slightly alkaline pH and some are compatible with bland oxidants. However, none of them is compatible with strong oxidants in combination with strongly alkaline pH, in particular none of them is stable in a sodium hypochlorite-based product at alkaline pH.

Because of the instability of the technologies available in the presence of hypochlorite and basic pH, the hypochlorite-based alkaline compositions, although having excellent cleaning, degreasing, deodorizing, and decoloring properties, are not able to prevent limescale from forming.

### DISCLOSURE OF INVENTION

The object of the present invention is to solve the foregoing technical problems.

In particular, the object of the present invention is to provide a hypochlorite-based composition capable of maintaining the typical properties of such compositions as well as to give the treated surfaces better gloss characteristics.

The object of the present invention is achieved through a composition according to Claim 1.

In particular, the present invention provides a composition having a pH equal to or greater than 12 of a hypohalite and a copolymer selected from the group consisting of COPOL-1 and COPOL-2.

Advantageously, even though the structure of the COPOL-1 and COPOL-2 copolymers has functional groups which are not notoriously stable at pH equal to or greater than 12 and especially in the presence of hypohalites, the inventors surprisingly noticed that the simultaneous presence of a hypohalite and of one of the COPOL-1 or COPOL-2 copolymers not only proves to be stable, but the composition also has improved gloss characteristics.

In particular, it was noted that the hypohalite-based formulate at alkaline pH makes the same formulate particularly performing, both fresh and after oven-simulated aging at 50°C for 10 days. Such characteristic leads to infer that, knowing the structure of the polymers, a structural change of the polymer is obtained by means of the formulation. In fact, the use of the polymer at the same levels in a fresh or aged hypochlorite-based product continues to ensure a greater preventative action as to the formation of watermarks compared to that of a same hydrogen peroxide-based formulate.

### Hypohalite

An essential component of the present invention is a hypohalite-based whitener. Hypohalites can be provided by a variety of sources, including the oxidizing whiteners which subsequently lead to the formation of halide ions as well as organic-based whiteners such as chloroisocyanurates.

The hypohalite-based whiteners which can be used for the present invention include alkaline metal and alkaline earth metal hypochlorites, hypobromites, hypoiodites, chlorinated trisodium phosphate dodecahydrates, potassium or sodium dichloroisocyanurates, potassium or sodium trichloroisocyanurates, N-chloroimides, N-chloroamides, N-chloroamines, and chlorohydantoines.

For liquid compositions, the preferred hypohalites are the alkaline metal and/or alkaline earth metal hypochlorites, more preferably selected from the group consisting of sodium, potassium, magnesium, lithium, calcium hypochlorites and mixtures thereof, even more preferably sodium hypochlorite.

Preferably, the liquid compositions according to the invention comprise hypohalite in concentrations such that the halide active content in the composition ranges between 0.1 and 20% by weight, more preferably between 0.5 and 6% by weight, even more preferably between 0.7 and 4.5% by weight of the total weight of the composition.

### COPOLYMERS

The composition of the invention further comprises a copolymer selected from the group consisting of COPOL-1 and COPOL-2.

### COPOL-1 COPOLYMER

The COPOL-1 copolymer is a copolymer obtainable by copolymerization of at least components a), b), and c), wherein:
a) 25.0 to 80 mol% of one or more cationic monomers selected from the group consisting of (meth)acrylamide and diallyldimethylammonium chloride cationic monomers, and
b) 0.1 to 50.0 mol%, preferably 0.5 to 50.0 mol%, more preferably 1.0 to 50.0 mol% of one or more polyethylene glycol macromonomers, and
c) 15.0 to 74.9 mol%, preferably 15.0 to 74.5 mol%, more preferably 15.0 to 74.0 mol% of one or more neutral acrylamide monomers.

In the present invention, the term (meth)acrylamide includes both the acrylic compound and its corresponding methacrylic compound.

The term "hard surface" denotes a surface made of a dimensionally stable material such as for example plastic, ceramic, china, glass or stone.

Preferably, the (meth)acrylamide cationic monomers of component a) are selected from the group consisting of monomers of formula (IV) 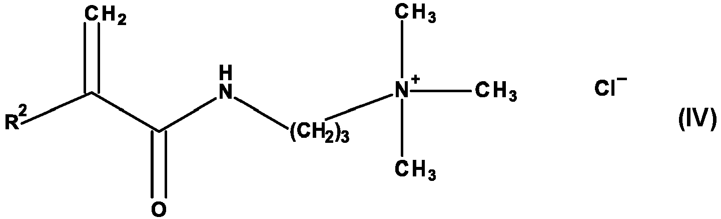 wherein R² is hydrogen or methyl.

The cationic monomers of component a) selected from the group consisting of diallyldimethylammonium chloride and (3-methacrylamidopropyl)trimethylammonium chloride are particularly preferred.

Preferably, the polyethylene glycol macromonomers of component b) are monomers of formula (V):

H₂C=CR^{y}-W-O-(C₃H₆O)_{g}-(CH₂CH₂O)ₕ-H (V)

wherein:
R^{y} is H or methyl;
W is C=O or O(CH₂)₄ and preferably O(CH₂)₄;
g is, in a molar ratio, a number ranging between 0 and 7, and preferably between 0 and 6; and
h is, in a molar ratio, a number ranging between 1 and 150, preferably between 11 and 150, more preferably between 12 and 150.

Preferably, in the formula (V):
i) R^{y} is H, g is 0 and h, in a molar ratio, is a number ranging between 1 and 150, preferably between 11 and 150, more preferably between 12 and 150 when W is O(CH₂)₄ or
ii) R^{y} is H or methyl, g, in a molar ratio, is a number between 1 and 7, preferably between 2 and 6, and more preferably between 3 and 6, and h, in a molar ratio, is a number between 1 and 150, preferably between 11 and 150, more preferably between 12 and 150 when W is C=O.

The particularly preferred polyethylene glycol macromonomers of component b) are selected from the group consisting of monomers of formula (V-A) and monomers of formula (V-B): 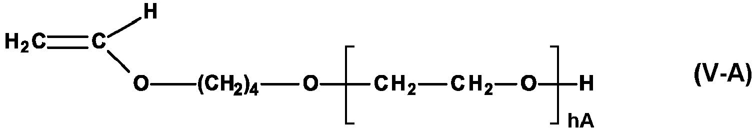 wherein:
hA, in a molar ratio, is a number ranging between 1 and 150, preferably between 1 and 120, more preferably between 11 and 120 and even more preferably between 22 and 120; 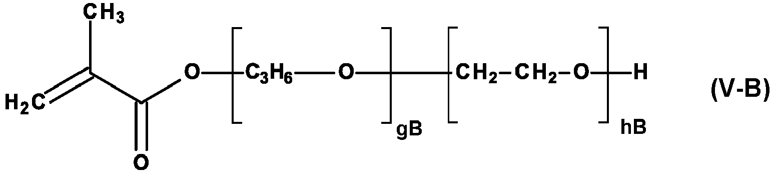
wherein:
   gB, in a molar ratio, is a number ranging between 1 and 7, preferably between 2 and 6, and more preferably between 3 and 6, and
   hB, in a molar ratio, is a number ranging between 1 and 150, preferably between 1 and 120, more preferably between 11 and 120 and even more preferably between 12 and 120.

The neutral acrylamide monomers of component c) are selected from the group consisting of monomers of formula (VI) 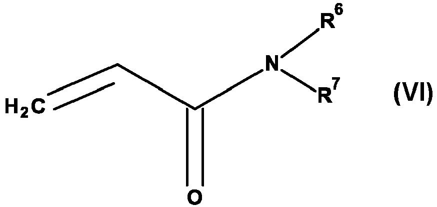 wherein R⁶ and R⁷ are the same or different, and independently selected from the group consisting of H and an aliphatic hydrocarbon having 1 to 20 carbon atoms, preferably 1 to 4 carbon atoms.

Preferably, the neutral acrylamide monomers of component c) are selected from the group consisting of acrylamide, N-ethylacrylamide, N,N-dimethylacrylamide, N-tertbutylacrylamide and N-isopropylacrylamide. The neutral acrylamide monomers of component c) selected from the group consisting of N,N-dimethylacrylamide and N-isopropylacrylamide are particularly preferred.

Preferably, the COPOL-1 copolymers are obtained by radical copolymerization of at least components a), b), and c) where, in the copolymerization, component a) is used at a concentration from 25.0 to 80.0 mol%, component b) is used in an amount ranging between 0.1 and 4.4 molt, preferably between 0.5 and 4.4 mol% and more preferably between 1.0 and 4.4 mol%, and component c) is used in an amount ranging between 15.6 and 74.9 mol%, preferably between 15.6 and 74.5 mol%, and more preferably between 15.6 and 74.0 mol%.

In a preferred embodiment, the COPOL-1 copolymers are obtained by copolymerization of components a), b), and c) only. In this embodiment, other monomers other than those of components a), b), and c) are not present.

In a further embodiment, the COPOL-1 copolymer is obtained by radical copolymerization of the monomers of components a), b), c) and, in addition, of one or more monomers of component d) which are different from the monomers of components a), b, and c).

The monomers of component d) are selected from the group consisting of N-vinyl substituted lactams having a 5-7-atom ring core and monomers of formula (XI): 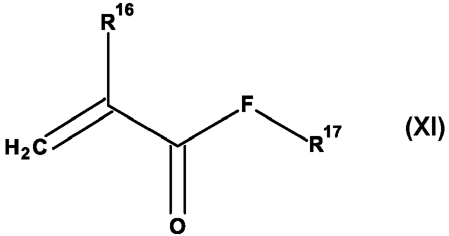 wherein:
R¹⁶ is the same or different, and is selected from H and methyl,
F is the same or different, and is selected from NH-(CₙH₂ₙ) with n=1, 2, 3, or 4, and
R¹⁷ is the same or different, and is selected from the group consisting of OH, SO₃H, PO₃H₂, O-PO₃H₂ and para-substituted C₆H₄-SO₃H.

In a preferred embodiment, among the N-vinyl substituted lactams having a ring comprising 5 to 7 atoms N-vinylpyrrolidone is particularly preferred.

The SO₃H, PO₃H₂, O-PO₃H₂, and para-substituted C₆H₄-SO₃H groups in the monomers of formula (XI) can be present in salt form, preferably as ammonium, alkaline or alkaline earth metal salts, more preferably ammonium or sodium salts.

Among the monomers of formula (XI) wherein R¹⁷ is N(CH₃)₂, those selected from the group consisting of [3-methacryloylamino)-propyl]-dimethylamine (R¹⁶=methyl, F=NH-(CₙH₂ₙ) with n=3 and R¹⁷=N(CH₃)₂) and [3-(acryloylamino)-propyl] -dimethylamine (R¹⁶=H, F=NH-(CₙH₂ₙ) with n=3 and R¹⁷=N(CH₃)₂) are preferred.

Among the monomers of formula (XI), those selected from the group consisting of [3-(acryloylamino)-propyl]-dimethylamine, [3-(methacryloylamino)-propyl]-dimethylamine, 2-acryloylamino-2-methylpropanesulfonic acid and 2-acryloylamino-2-methylpropanesulfonic acid salts are preferred, and 2-acryloylamino-2-methylpropanesulfonic acid and 2-acryloylamino-2-methylpropanesulfonic acid salts are particularly preferred.

In a preferred embodiment of the invention, at least one of the monomers of component d) is selected from the group consisting of monomers of formula (XII): 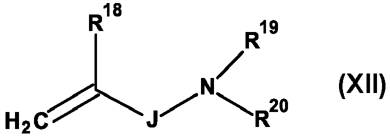 wherein:
J is the same or different, and is selected from the group consisting of -CO-O-(CH₂)ₓ,
x is an integer ranging between 1 and 6, preferably between 2 and 3,
R¹⁸ is the same or different, and is selected from the group consisting of H and methyl,
R¹⁹ and R²⁰ are the same or different, and independently selected from the group consisting of H, an aliphatic hydrocarbon having 1 to 20 carbon atoms, preferably 1 to 4 carbon atoms, a cycloaliphatic hydrocarbon having 5 to 20 carbon atoms, preferably 5 to 8 carbon atoms, an aryl having 6 to 14 carbon atoms, and a polyethylene glycol.

Among the monomers of formula (XII) those selected from the group consisting of [2-(methacryloyloxy)ethyl]-dimethylamine, [2-(acryloyloxy)-ethyl]-dimethylamine, [2-(methacryloyloxy)-ethyl]diethylamine and [2-(acryloyloxy)-ethyl]-diethylamine are particularly preferred.

In a preferred embodiment, at least one of the monomers of component d) is selected from the group consisting of monomers of formula (XIII) or (XIV): 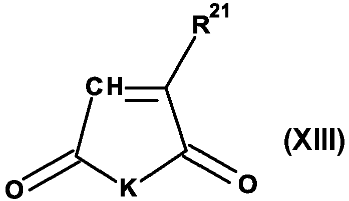 wherein:
R²¹ is the same or different, and is selected from the group consisting of H and methyl,
K is the same or different, and is selected from the group consisting of O and NH; 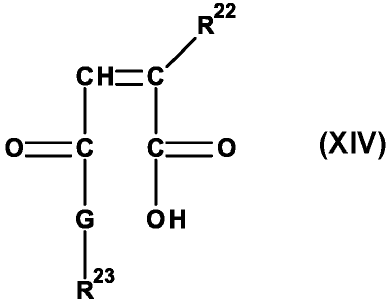
R²² is the same or different, and is selected from the group consisting of H and methyl,
G is the same or different, and is selected from the group consisting of O and NH, and
R²³ is the same or different and is selected from the group consisting of H, (C_{n'}H_{2n'})-SO₃H where n'=0, 1, 2, 3 or 4; (C_{n'}H_{2n'})-OH where n'=0, 1, 2, 3 or 4; (C_{n'}H_{2n'})-PO₃H₂ where n'=0, 1, 2, 3 or 4; (C_{n'}H_{2n'})-OPO₃H₂ where n'=0, 1, 2, 3 or 4; (C₆H₄)-SO₃H; (C₆H₄)-PO₃H₂; (C₆H₄)-OPO₃H₂ and (CₘH₂ₘ)ₑO-(A'O)ᵤR⁴⁴ with m=0, 1, 2, 3 or 4, e=0, 1, 2, 3 or 4, A'=C_{x'}H_{2x'} with x'=2, 3, 4 or 5, u=an integer ranging between 1 and 350 and R⁴⁴ is the same or different and represented by a linear or branched C1-C4 alkyl group.

The monomers of formula (XIV) can also be present in salt form, preferably as ammonium, alkaline or alkaline earth metal salts, and more preferably as ammonium or sodium salts.

Among the monomers of formula (XIII) or (XIV) those selected from the group consisting of maleic anhydride, maleic acid and maleic acid salts are preferred.

In an embodiment, at least one of the monomers of component d) is selected from the group consisting of monomers of formula (XV): 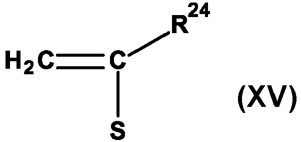 wherein:
S is the same or different, and is represented by the group -COOM^{k},
R²⁴ is the same or different, and is selected from the group consisting of H and linear or branched C1-C4 alkyl and is preferably represented by H and methyl; and
M is a cation selected from the group consisting of hydrogen ion, alkaline ion, alkaline earth ion, where k is the valency.

Among the monomers of formula (XV) those selected from the group consisting of acrylic acid, sodium acrylate, potassium acrylate, methacrylic acid, sodium methacrylate and potassium methacrylate are preferred.

In an embodiment, at least one of the monomers of component d) is selected from the group consisting of monomers of formula (XIa), (XIb) or (XIc): 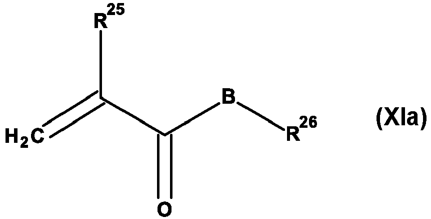 wherein
R²⁵ is the same or different, and is selected from H and methyl,
B is represented by O,
R²⁶ is the same or different, and is selected from the group consisting of linear or branched C1-C5 monohydroxyalkyl; 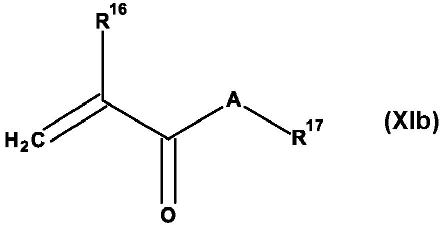
wherein:
   R¹⁶ is the same or different, and is selected from H and methyl,
   A is the same or different, and is represented by O-(C_{d}H_{2d}) where d=1, 2, 3 or 4;
   R¹⁷ is the same or different, and is selected from the group consisting of OH, SO₃H, PO₃H₂, OPO₃H₂, and para substituted C₆H₄- SO₃H; 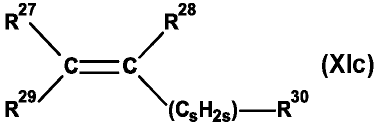
   wherein:
      R²⁷, R²⁸ and R²⁹ are the same or different, and independently selected from the group consisting of H, linear or branched C1-C4 alkyl;
      s is the same or different, and is represented by 0, 1, 2, 3 or 4;
      R³⁰ is the same or different, and is selected from the group consisting of (C₆H₅), OH, OR^{b}, where R^{b} is represented by an alkyl having 1 to 8, preferably 4, carbon atoms and - OOCCH₃.

The SO₃H, PO₃H₂, OPO₃H₂, and para-substituted C₆H₄-SO₃H groups in the monomer of formula (XIb) can also be present in salt form, preferably as ammonium salt, alkaline or alkaline earth salt, more preferably ammonium or sodium salt.

Among the monomers of formula (XIc) those selected from the group consisting of vinyl butyl ether and vinyl acetate are particularly preferred.

In a preferred embodiment of the invention, the COPOL-1 copolymers are obtained by radical copolymerization of the monomers of component a), b), c), and in addition d), wherein:
component a) is used at a concentration ranging between 25.0 and 80.0 mol%,
component b) is used at a concentration ranging between 0.1 and 50.0 mol%, preferably between 0.5 and 50.0, more preferably between 1.0 and 50.0 mol%, and even more preferably between 1 and 10 mol%,
component c) is used at a concentration ranging between 15.0 and 74.4 mol%, and preferably between 15.6 and 73.9 mol%,
component d) is used at a concentration ranging between 0.1 and 40 mol%, preferably between 0.1 and 30 mol%.

In a particularly preferred embodiment, the COPOL-1 copolymer is obtained by radical copolymerization of component a), b), c) and in addition d), wherein
component a) is used at a concentration ranging between 25.0 and 80.0 mol%,
component b) is used at a concentration ranging between 0.1 and 4.4 mol%, preferably between 0.5 and 4.4 mol%,
component c) is used at a concentration ranging between 15.6 and 74.4 mol%, and
component d) is used at a concentration ranging between 0.1 and 40 mol%, preferably between 0.1 and 30 mol%.

In an embodiment of the invention, the COPOL-1 copolymer is obtained by radical copolymerization of components a), b), c,), and d) only. In this embodiment, other monomers different from those of components a), b), c), and d) are not present.

The structural units of the COPOL-1 copolymers preferably result from the polymerization of the monomers of component a), b), c) and optionally d), and optionally further monomers in a random, block, alternate and gradient distribution.

The average molecular weight MW of the COPOL-1 copolymers ranges preferably between 10,000 and 250,000 g/mol, more preferably between 15,000 and 200,000 g/mol and even more preferably between 20,000 and 150,000 g/mol.

The COPOL-1 copolymers can be prepared by the methods known by the person skilled in the art, preferably by radical copolymerization in solvent.

Common solvents are for example polar solvents such as alcohols, water, or mixtures thereof.

The polymerization can be initiated from radical sources such as, for example, inorganic persulfates, organic azo compounds, peroxides, inorganic redox systems, and UV light.

In addition, chain transfer agents can be used to form less reactive radicals and control the molecular weight of the copolymers. For example, phenols, thiols, sodium 2-mercaptoethansulfonate or sodium hypophosphite can be used.

For example, the COPOL-1 copolymers can be prepared by mixing the monomers of the copolymer, optionally in the presence of a chain transfer agent, in a solvent. Then, the temperature is increased and the radical initiator is adjusted.

The copolymerization is thus performed at the desired temperature for the desired period of time.

The reaction mixture is thus optionally cooled and the copolymer formed is further modified in solution or prepared.

For example, the copolymer-containing solution can be concentrated with a partial evaporation of the solvent, optionally at reduced pressure or the solvent can be eliminated completely by evaporation, or still the copolymer can be isolated, for example by freeze-drying or precipitation.

Preferably, the COPOL-1 copolymers are obtained by radical polymerization of at least components a), b), and c) in a solvent selected from the group consisting of water, one or more alcohols and mixtures thereof, wherein the alcohol is selected from the group consisting of methanol, ethanol, isopropanol, n-propanol, isobutanol, n-butanol, tert-butanol, ethylene glycol, propylene glycol, propylene glycol monobutyl ether, ethylene glycol monobutyl ether, propylene glycol monomethyl ether, ethylene glycol monomethyl ether and mixtures thereof.

Particularly preferred solvents are selected from the group consisting of water, ethanol, isopropanol, propylene glycol, tert-butanol, propylene glycol monobutyl ether, and mixtures thereof, those selected from the group consisting of water, isopropanol, propylene glycol, tert-butanol and mixtures thereof are more preferred.

The COPOL-1 copolymers can be preferably obtained by radical copolymerization of at least components a), b), and c) at a temperature ranging from 20 to 200°C, more preferably ranging from 20 to 100°C and even more preferably ranging from 40 to 80°C.

The COPOL-1 copolymers can be obtained by radical polymerization of at least components a), b), and c) wherein the radical copolymerization is initiated by heating, radiation with light or by the addition of a radical initiator and is preferably initiated by the addition of a radical initiator preferably chosen from the group consisting of peroxides, preferably dialkylperoxydes, hydroperoxydes, peroxyketals, peroxyesthers, peroxydicarbonates, and diacylperoxydes; azo compounds, preferably 2,2'-azobis[2-(2-imidazoline-2-yl)propane]dichloride, 2,2'-azobis(2-methylpropionamidine) dichloride, 2,2'-azobis[N-(2-carboxyethyl)-2-methylpropionamidine]tetrahydrate, 2,2'-azobis[2-(2-imidazoline-2-yl)propane], 2,2'-azobis[2-methyl-N-(2-hydroxyethyl)propionamide, 4,4'-azobis(4-cyanovaleric acid), 2,2'-azobis(isobutyronitrile), 2,2'-azobis(4-methoxy-2,4-dimethylvaleronitrile), 2,2'-azobis(2,4-dimethylvaleronitrile), dimethyl 2,2'-azobis (2-methylpropionate), 2,2'-azobis(2-methylbutyronitrile), 1,1'-azobis(cycloesan-1-carbonitrile) and 2,2'-azobis (N-butyl-2-methylpropionamide); and persulfate-based initiators, preferably ammonium persulfate, sodium persulfate, and potassium persulfate.

The COPOL-1 copolymers can be preferably obtained by radical copolymerization of at least components a), b), and c) wherein the radical copolymerization is performed by the addition of a radical initiator selected from the group consisting of 2,2'-azobis(2-methylpropionamidine) dichloride, 2,2'-azobis[N-(2-carboxyethyl)-2-methylpropionamidine]tetrahydrate, 2,2'-azobis[2-(2-imidazolin-2-yl)propane], 2,2'-azobis[2-methyl-N-(2-hydroxyethyl)propionamide, 4,4'-azobis(4-cyanovaleric acid), ammonium persulfate, sodium persulfate, and potassium persulfate, and preferably initiated by the addition of a radical initiator selected from the group consisting of ammonium persulfate, sodium persulfate and 2,2'-azobis[2-(2-imidazolin-2-yl)propane] dichloride.

In a preferred embodiment of the invention, the COPOL-1 copolymer is obtained by radical polymerization of at least components a), b), and c) wherein the radical copolymerization is performed in the presence of a chain transfer agent selected from the group consisting of mercaptans, preferably octylmercaptan, n-dodecylmercaptan, tert-dodecylmercaptan, mercaptoethanol and sodium 2-mercaptoethansulfonate; halogenated compounds; thiosalicylic acid; mercaptoacetic; buten-1-ol; dimeric α-methylstyrene and hypophosphite derivatives, preferably sodium hypophosphite.

In a preferred embodiment, the copolymers of the invention are obtained by radical polymerization of at least components a), b), and c) wherein the radical copolymerization is performed in the presence of a chain transfer agent selected from the group consisting of mercaptans, preferably sodium 2-mercaptoethansulfonate and sodium hypophosphite, even more preferably sodium hypophosphite.

### COPOL-2 COPOLYMER

The COPOL-2 copolymer can be obtained by copolymerization of one or more structural units (A) and one or more macromonomeric structural units (B). The COPOL-2 copolymer comprises:
- 0.1 to 99.4 mol%, preferably 15.0 to 84.5 mol% and even more preferably 23.0 to 79.0 mol% of one or more cationic structural units (A) and
- 0.4 to 4.5 mol%, preferably 0.5 to 4.4 mol% and even more preferably 1.0 to 4.4 mol% of one or more macromonomeric structural units (B)

The cationic structural unit (A) is represented by the general formulas (I) and/or (II) 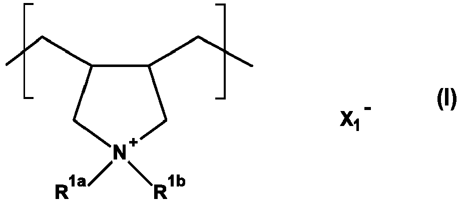 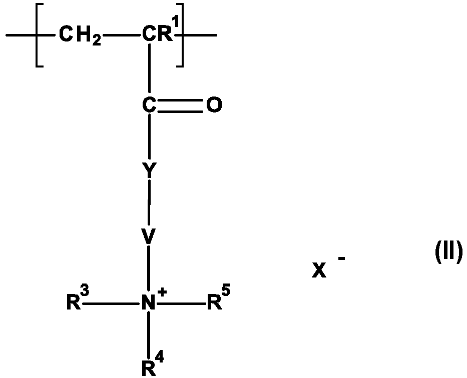
wherein R¹ and R^{1a} are the same or different, and independently selected from H and methyl;
R^{1b}, R³, R⁴ and R⁵ are the same or different, and independently selected from the group consisting of H, aliphatic hydrocarbon having 1 to 20 carbon atoms, preferably 1 to 4 carbon atoms, cycloaliphatic hydrocarbon having 5 to 20 carbon atoms, preferably 5 to 8 carbon atoms, aryl having 6 to 14 carbon atoms and/or polyethylene glycol; and preferably R^{1b}, R³, R⁴, and R⁵ are the same or different, and independently selected from the group consisting of H and methyl, preferably methyl;
Y is the same or different, and selected from the group consisting of O, NH and NR³;
V is the same or different, and selected from the group consisting of -(CH₂)ᵢ- where i is the same or different and an integer ranging between 1 and 6; 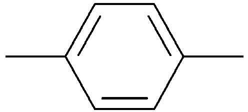 and 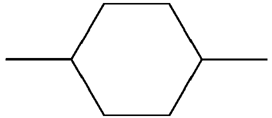
and is preferably 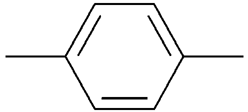
X and X₁ are the same or different, and independently selected from the group consisting of halogen, C₁₋₄-alkyl sulfate and C₁₋₄-alkyl sulfonate.

The macromonomeric structural unit (B) is represented by the formula (III) 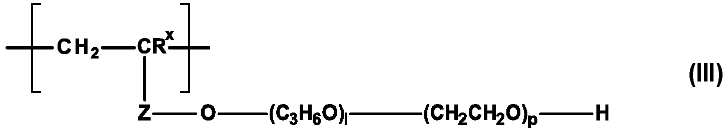
wherein R^{x} is the same or different, and is selected from the group consisting of H and methyl;
Z is the same or different, and selected from the group consisting of C=O and O(CH₂)₄;
l is, in a molar ratio, a number ranging between 0 and 7, preferably between 0 and 6; and
p is, in a molar ratio, a number ranging between 1 and 150, preferably between 11 and 150, and more preferably between 12 and 150.

The structural unit (A) comprises the polymerization product of at least one polymeric species selected from the group consisting of [2-(acryloyloxy)ethyl]trimethyl ammonium chloride, [2-(acryloylamino)ethyl]trimethyl ammonium chloride, [2-(acryloyloxy)ethyl]trimethyl ammonium methosulfate, [2-(methacryloyloxy)ethyl]trimethylammonium chloride or methosulfate, [3-(acryloylamino)propyl]trimethylammonium chloride, [3-(methacryloylamino)propyl]trimethylammonium chloride, and diallyldimethylammonium chloride (DADMAC), preferably [3-(acryloylamino)propyl]trimethylammonium chloride, [3-(methacryloylamino)propyl]trimethylammonium chloride, and diallyldimethylammonium chloride (DADMAC), even more preferably [3-(methacryloylamino)propyl]trimethylammonium chloride and diallyldimethylammonium chloride (DADMAC).

The macromonomeric structural unit (B) of formula (III) can be obtained by polymerization of at least one monomeric species selected from the group consisting of polyethylene glycol vinyloxy-butyl ether, polyethylene glycol co-polypropylene glycol vinyloxybutylether (wherein l, in a molar ratio, is a number ranging between 1 and 7, preferably between 2 and 6, and more preferably between 3 and 6), polyethylene glycol (meth)acrylate and polyethylene glycol-co-polypropylene glycol (meth)acrylate (wherein 1, in a molar ratio, is a number ranging between 1 and 7, preferably between 2 and 6, and more preferably between 3 and 6).

In the context of the present invention, the term "(meth)acrylate" includes both the acrylate compound and its corresponding methacrylate compound.

In an embodiment, in the macromonomeric structural unit (B) of formula (III):
i) R^{x} is H, l is 0 and p, in a molar ratio, is a number ranging between 1 and 150, when Z is O(CH₂)₄, or
ii) R^{x} is the same or different, and is selected from the group consisting of H and methyl, 1, in a molar ratio, is a number ranging between 1 and 7 and p, in a molar ratio, is a number ranging between 1 and 150, when Z is C=O.

The COPOL-2 copolymer can further comprise one or more structural units (C) differing from structural units (A) and (B), and are present at a concentration ranging between 0.1 and 99.4 mol%, preferably between 15.0 and 84.5 mol% and more preferably between 20.0 and 74.0 mol%.

In one embodiment, the COPOL-2 copolymer contains:
- 0.1 to 99.4 mol% of one or more cationic structural units (A);
- 0.4 to 4.5 mol% of one or more macromonomeric structural units (B); and
- 0.1 to 99.4 mol% of one or more structural units (C),
preferably:
- 15.0 to 84.5 mol% of one or more cationic structural units (A);
- 0.5 to 4.4 mol% of one or more macromonomeric structural units (B); and
- 15 to 84.5 mol% of one or more structural units (C);
and even more preferably:
- 23.0 to 79.0 mol% of one or more cationic structural units (A);
- 1.0 to 4.4 mol% of one or more macromonomeric structural units (B); and
- 20.0 to 74.0 mol% of one or more structural units (C) .

In an embodiment, the structural units (C) are the product of the polymerization of at least one monomeric species selected from the group consisting of non-cationic acrylamides, non-cationic methacrylamides, and N-vinyl substituted lactams having a 5-7-atom ring core.

In an embodiment, the structural units (C) are selected from the group consisting of polymerization products of at least one N-vinyl substituted lactam, having a 5-7-atom ring core, and structural units having general formula (VII) or (VIII): 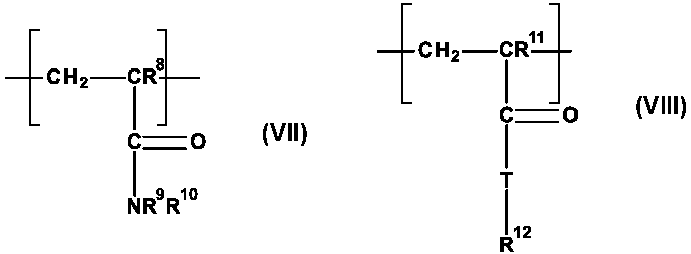
wherein R⁸ is the same or different, and is selected from the group consisting of H and methyl,
R⁹ and R¹⁰ are each the same or different, and independently selected from the group consisting of H, an aliphatic hydrocarbon having 1 to 20 carbon atoms, a cycloaliphatic hydrocarbon having 5 to 20 carbon atoms, an aryl having 6 to 14 carbon atoms, an alkylaryl having 7 to 14 carbon atoms, a linear or branched monohydroxyalkyl having 1 to 5 carbon atoms, and a polyethylene glycol;
R¹¹ is the same or different, and is selected from the group consisting of H and methyl,
T is the same or different, and is selected from the group consisting of NH-(CⱼH₂ⱼ) with j=1, 2, 3 or 4; and
R¹² is the same or different, and is selected from the group consisting of OH, SO₃H, PO₃H₂, O-PO₃H₂ and para-substituted C₆H₄-SO₃H.

Among the N-vinyl substituted lactams having a 5-7-atom ring core, N-vinylpyrrolidone is preferred.

The SO₃H, PO₃H₂, O-PO₃H₂, and para-substituted C₆H₄-SO₃H groups of the structural unit of formula (VIII) can be present in salt form, preferably ammonium salts, alkaline or alkaline earth salts, preferably ammonium salts or sodium salts.

Among the structural units of formula (VIII) wherein R¹² is N(CH₃)₂, those structural units which are the product of the polymerization of at least one monomeric species selected from the group consisting of [3-methacryloylamino)-propyl]-dimethylamine (R¹¹=methyl, T= NH-(CⱼH₂ⱼ) with j=3 and R¹²=N(CH₃)₂) and [3-(acryloylamino)-propyl]-dimethylamine (R¹¹=H, T=NH-(CⱼH₂ⱼ) with j=3 and R¹²=N(CH₃)₂) are preferred.

Among the structural units of formula (VIII), those selected from the group consisting of [3-(acryloylamino)-propyl]-dimethylamine, [3-(methacryloylamino)-propyl]-dimethylamine, 2-acryloylamino-2-methylpropanesulfonic acid and salts thereof are preferred, those selected from the group consisting of 2-acryloylamino-2-methylpropanesulfonic acid and salts thereof are more preferred.

The structural units (C) selected from structural units of formula (VII) are particularly preferred.

More preferably, the structural units (C) comprise a polymerization product of at least one monomeric species selected from the group consisting of acrylamide, methacrylamide, N-methacrylamide, N,N-dimethylacrylamide, N-ethylacrylamide, N-cyclohexylacrylamide, N-benzylacrylamide, N-methylolacrylamide, N-isopropylacrylamide and N-tertbutylacrylamide, and even more preferably a polymerization product of at least one monomeric species selected from the group consisting of N,N-dimethylacrylamide and N-isopropylacrylamide.

In an embodiment, the COPOL-2 copolymers contain structural units (A), (B), and (C) as recurring structural units and do not contain other recurring structural units.

In an embodiment, the recurring structural units of the COPOL-2 copolymer consist of:
- 4.0 to 90.0 mol%, preferably 15.0 to 83.5 mol% and more preferably 23.0 to 78.0 mol% of one or more cationic structural units (A) containing the product of the polymerization of at least one monomeric species selected from the group consisting of [3-(acryloylamino)propyl]dimethylammonium chloride, [3-(methacryloylamino)propyl]dimethylammonium chloride, and diallyldimethylammonium chloride, preferably [3-(methacryloylamino)propyl]dimethylammonium chloride, and diallyldimethylammonium chloride;
- 1.0 to 4.5 mol%, preferably 1.5 to 4.5 mol%, more preferably 2.0 to 4.4 mol% of one or more macromonomeric structural units (B) of formula (III) wherein
   R^{x} is the same or different, and is selected from H and methyl, Z is C=O, l, in a molar ratio, is a number between 1 and 7, preferably between 2 and 6, more preferably between 3 and 6, and p, in a molar ratio, is a number between 1 and 150, preferably between 11 and 150, and more preferably between 22 and 150 or
   R^{x} is H, Z is O(CH₂)₄, l is 0 and p, in a molar ratio, is a number ranging between 1 and 150, preferably between 11 and 150, and more preferably between 22 and 150
   and preferably of one or more macromonomeric structural units (B) of formula (III) wherein R^{x} is H, Z is O(CH₂)₄, l is 0 and p, in a molar ratio, is a number ranging between 1 and 150, preferably between 11 and 150, and more preferably between 22 and 150; and
- 9.0 to 95.0 mol%, preferably 15.0 to 80.5 mol% and more preferably 20.0 to 73.0 mol% of one or more structural units (C) which are the product of the polymerization of at least one polymeric species selected from the group consisting of N-vinylpyrrolidone, N,N-dimethylacrylamide, and N-isopropylacrylamide and preferably selected from the group consisting of N,N-dimethylacrylamide and N-isopropylacrylamide.

In an embodiment, the COPOL-2 copolymer contains, in addition to the structural units (A), (B), and (C), one or more structural units (D) which are different from the structural units (A), (B), and (C), preferably at a concentration ranging between 0.1 and 99.4 mol%, more preferably between 0.1 and 40.0 mol% and even more preferably between 0.1 and 30.0 mol%.

In a preferred embodiment, the COPOL-2 copolymer comprises:
- 0.1 to 99.4 mol% of one or more cationic structural units (A);
- 0.4 to 4.5 mol% of one or more macromonomeric structural units (B);
- 0.1 to 99.4 mol% of one or more structural units (C); and
- 0.1 to 99.4 mol% of one or more structural units (D),
preferably:
- 15.0 to 84.5 mol% of one or more cationic structural units (A);
- 0.5 to 4.4 mol% of one or more macromonomeric structural units (B); and
- 15 to 80.0 mol% of one or more structural units (C); and
- 0.1 to 40.0 mol% of one or more structural units (D);
and even more preferably:
- 23.0 to 78.9 mol% of one or more cationic structural units (A);
- 1.0 to 4.4 mol% of one or more macromonomeric structural units (B); and
- 20.0 to 74.0 mol% of one or more structural units (C) and
- 0.1 to 30.0 mol% of one or more structural units (D).

In an embodiment, one or more structural units (D) are selected from the group consisting of structural units of formula (XVI) 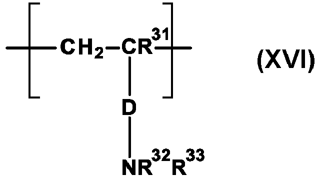 wherein:
D is the same or different, and is selected from the group consisting of -COO(CH₂)ₜ;
t is an integer ranging between 1 and 6, preferably between 2 and 3;
R³¹ is the same or different, and is selected from H and methyl; and
R³² and R³³ are the same or different, and independently chosen from the group consisting of H, aliphatic hydrocarbon having 1 to 20, preferably 1 to 4, carbon atoms, cycloaliphatic hydrocarbon having 5 to 20, preferably 5 to 8, carbon atoms, an aryl having 6 to 14 carbon atoms, and polyethylene glycol.

Among the structural units of formula (XVI) those which are the product of the polymerization of at least one monomeric species selected from the group consisting of [2-(metacryloyloxy)ethyl]-dimethylamine, [2-(acryloyloxy)-ethyl]dimethylamine, [2-(metacryloyloxy)-ethyl]-diethylamine and [2-(acryloyloxy)-ethyl]-diethylamine are preferred.

In an embodiment, one or more structural units (D) are selected from the group consisting of structural units of formula (IX) and (X): 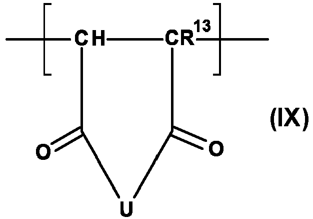
wherein R¹³ is the same or different, and is selected from the group consisting of H and methyl,
U is the same or different, and is selected from the group consisting of O and NH, 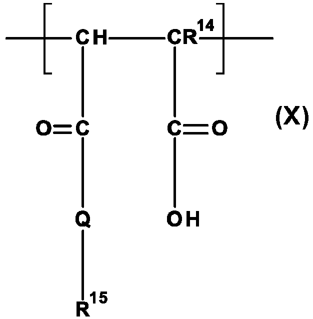
wherein R¹⁴ is the same or different, and is selected from the group consisting of H and methyl,
Q is the same or different, and is selected from the group consisting of O and NH,
R¹⁵ is the same or different, and is selected from the group consisting of H, (CₖH₂ₖ)-SO₃ with k=0, 1, 2, 3 or 4; (C₆H₄)-SO₃H; (C₆H₄)-PO₃H₂; (C₆H₄)-OPO₃H₂ and (C_{q}H_{2q})ₑ-O(B'O)ᵣ-R⁴⁵ with q=0, 1, 2, 3 or 4; e=0, 1, 2, 3 or 4, B'=CₐH₂ₐ con a=2, 3, 4 o 5, r=an integer from 1 to 350, and R⁴⁵ is the same or different, and is selected from the group consisting of a linear or branched alkyl having 1 to 4 carbon atoms.

The structural units of formula (X) can also be present in salt form, preferably as ammonium salts, alkaline or alkaline earth metals, more preferably as ammonium or sodium salts.

Among the structural units of formula (IX) and (X) those which are the product of the polymerization of at least one monomeric species selected from the group consisting maleic anhydride, maleic acid, and maleic acid salts are preferred.

In an embodiment, one or more structural units (D) are selected from the group consisting of structural units of formula (XVII): 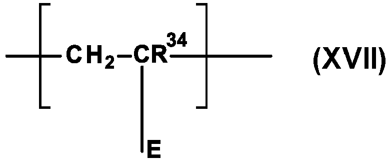 wherein:
E is the same or different, and is represented by the group -COOP^{z}
R³⁴ is the same or different, and is selected from the group consisting of H and linear or branched C1-C4 alkyl, preferably H and methyl; and
P is a cation selected from the group consisting of hydrogen ion, alkaline metal ion and alkaline earth metal ion, wherein z is the valency.

Among the structural units of formula (XVII) those which are the product of the polymerization of at least one monomeric species selected from the group consisting of acrylic acid, sodium acrylate, potassium acrylate, methacrylic acid, sodium methacrylate and potassium methacrylate are preferred.

If the COPOL-2 copolymer contains one or more structural units (D) in a further embodiment, they are selected from the group consisting of structural units of formula (VIIIa), (VIIIb), and (VIIIc): 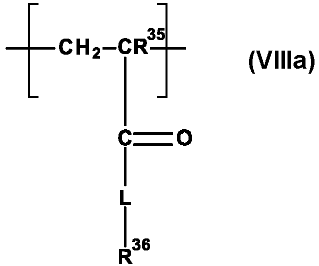 wherein:
R³⁵ is the same or different, and is selected from the group consisting of H and methyl,
L is the same or different, and is represented by O,
R³⁶ is the same or different, and is selected from the group consisting of linear or branched C1-C5 monohydroxyalkyl; 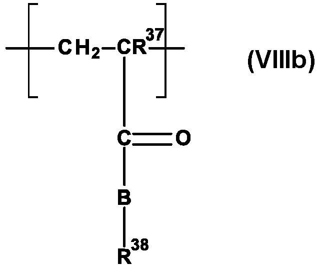
wherein:
   R³⁷ is the same or different, and is selected from the group consisting of H and methyl,
   B is the same or different, and is represented by O-(CnH2n) where n is 1, 2, 3 or 4
   R³⁸ is the same or different, and is selected from the group consisting of OH, SO₃H, PO₃H₂, OPO₃H₂, and para substituted C₆H₄SO₃H; 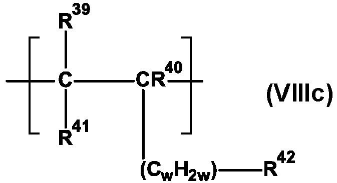
   wherein:
      R³⁹, R⁴⁰ and R⁴¹ are the same or different, and independently chosen from the group consisting of H and linear or branched C1-C4 alkyl,
      w is the same or different, and is selected from the group consisting of 0, 1, 2, 3 and 4
      R⁴² is the same or different and is selected from the group consisting of (C₆H₅), OH, OR⁴³ where R⁴³ is selected from the group consisting of an alkyl group having 1 to 8 carbon atoms, preferably 4 carbon atoms, and OOCCH₃.

The SO₃H, PO₃H₂, OPO₃H₂, and para-substituted C₆H₄-SO₃H groups in the structural units of formula (XI) can also be present in salt form, preferably ammonium salt, alkaline or alkaline earth salt, and in particular, ammonium salt or sodium salt.

Among the structural units of formula (VIIIc) the products of the polymerization of at least one monomeric species chosen from the group consisting of vinyl butyl ether and vinyl acetate are preferred.

In a preferred embodiment, the COPOL-2 copolymers contain the structural units (A), (B), (C), and (D) as recurring structural units, but do not contain other recurring structural units.

In an embodiment, the recurring structural units of the COPOL-2 copolymer consist of:
- 0.1 to 99.4 mol%, preferably 15.0 to 84.4 mol% and more preferably 23.0 to 78.9 mol% of one or more cationic repetitive units (A) which are preferably the product of the polymerization of at least one monomeric species selected from the group consisting of [3-(acryloylamino)-propyl]-trimethylammonium chloride, [3-(methacryloylamino)-propyl]-trimethylammonium chloride, and diallyldimethylammonium chloride and more preferably the product of the polymerization of [3-(methacryloylamino)-propyl]-trimethylamonium chloride;
- 0.4 to 4.5 mol%, preferably 0.5 to 4.4 mol%, 1.0 to 4.4 mol%, preferably of one or more macromeric units of general formula (III) wherein R^{x} is the same or different, and is selected from the group consisting of H and methyl, Z is C=O, l is, in a molar ratio, a number from 1 to 5, preferably 1 to 4, and more preferably 2 to 4, and p is, in a molar ratio, a number from 1 to 150, preferably 22 to 150, or R^{x} is H, Z is O(CH₂)₄, l is 0 and p, in a molar ratio, is a number from 1 to 150, preferably 11 to 150, more preferably 22 to 150 and even more preferably one or more macromeric units (B) of general formula (III) wherein R^{x} is H, Z is O(CH₂)₄, l is 0 and p, in a molar ratio, is a number from 1 to 150, preferably 11 to 150, more preferably 22 to 150;

- 0.1 to 99.4 mol%, preferably 15.0 to 80.0 mol% and more preferably 20.0 to 74.0 mol% of one or more structural units (C) which are preferably the product of the polymerization of at least one monomeric species selected from the group consisting of N,N-dimethylacrylamide and N-isopropylacrylamide and in particular is the product of the polymerization of N,N-dimethylacrylamide, and
- 0.1 to 99.4 mol%, preferably 0.1 to 40.0 mol% and more preferably 0.1 to 30.0 mol% of one or more structural units (D) which are the product of the polymerization of at least one monomeric species selected from the group consisting of maleic anhydride, maleic acid, and maleic acid salts.

The structural units (A), (B), and optionally (C) and (D) of the COPOL-2 copolymer, are preferably present in a random, block, alternate or gradient distribution.

The average molecular weight MW of the COPOL-2 copolymer ranges between 10,000 and 250,000 g/mol, preferably 15,000 to 200,000 g/mol and more preferably 20,000 to 150,000 g/mol.

The COPOL-2 copolymers can be prepared by methods known by the person skilled in the art, preferably by free radical copolymerization in solvent.

Common solvents are for example polar solvents such as alcohols, water, or mixtures thereof.

The polymerization can be initiated from radical sources such as, for example, inorganic persulfates, organic azo compounds, peroxides, inorganic redox systems, and UV light.

In addition, chain transfer agents can be used to form less reactive radicals and control the molecular weight of the copolymers. For example, phenols, thiols, sodium 2-mercaptoethansulfonate or sodium hypophosphite can be used.

For example, the COPOL-2 copolymers can be prepared by mixing the copolymer monomers, optionally in the presence of a chain transfer agent, in a solvent. Then, the temperature is increased, and the radical initiator is adjusted.

The copolymerization is thus performed at the desired temperature for the desired period of time.

The reaction mixture is thus optionally cooled and the copolymer formed is further modified in solution or prepared.

For example, the copolymer-containing solution can be concentrated with a partial evaporation of the solvent, optionally at reduced pressure or the solvent can be eliminated completely by evaporation, or still the copolymer can be isolated, for example by freeze-drying or precipitation.

### Alkalinity source

The alkalinity source is another essential component of the compositions of the present invention.

The alkalinity source ensures that the composition pH per se ranges typically between 12 and 14 when measured at 25°C.

In this alkaline range, the hypohalite exhibits its excellent stability and ensures the best performances in terms of cleaning and safety.

The pH range is obtained with the alkalinity source and the above-mentioned hypohalite, which are alkalis. Appropriate alkalinity sources for use in the present composition are selected from the group consisting of buffer agents, strong bases, and mixtures thereof.

The buffer agents are selected from the group consisting of alkaline metal salts of carbonates, polycarbonates, sesquicarbonates, silicates, polysilicates, borates, metaborates, phosphates, stannates, aluminates, and mixtures thereof, and are preferably selected from the group consisting of sodium carbonate, sodium silicate, sodium borate and mixtures thereof.

The strong bases are selected from the group consisting of caustic alkalis such as sodium hydroxide, potassium hydroxide and/or lithium hydroxide and/or alkaline metal oxides such as sodium and/or potassium oxide and mixtures thereof, and are preferably selected from the group consisting of sodium hydroxide and potassium hydroxide.

Preferably, the alkalinity source is a mixture of sodium silicate and sodium hydroxide.

The concentration of the alkalinity source in the composition ranges between 0.05% and 10% by weight of the composition, preferably between 0.5% and 5% and more preferably between 1.0% and 4.0%.

Typical levels of strong bases, when present, range between 0.01% and 3.5% by weight, preferably between 0.1% and 3.0%, and more preferably between 0.5% and 2.8% by weight of the composition.

The liquid compositions contain a buffer agent concentration ranging between 0.05% and 5% by weight, preferably between 0.5% and 5%, more preferably between 0.6% and 3% by weight of the weight of the composition.

### Surfactants

The composition of the invention can also contain a surfactant or a mixture of surfactants, added in a sufficient amount to obtain the desired cleaning efficiency.

The term "surfactant" used here refers to a substance capable of reducing the surface tension of water. Preferably, the total level of surfactants ranges between 0.001 and 20% w/w of the total amount of the aqueous solution, preferably between 0.01 and 10%, more preferably between 0.01 and 7%, even more preferably between 0.0125 and 5%.

The surfactant or the mixture of surfactants contained in the liquid composition of the present invention is preferably anionic, non-ionic, cationic, zwitterionic, amphoteric, ampholytic surfactants or mixtures thereof.

Hereinafter is a brief, exemplifying, and non-exhaustive description of the various surfactant classes which can be used in the composition of the invention.

### Anionic surfactants

Non-exhaustive examples of anionic surfactants suitable for the composition of the present invention comprise conventional anionic surfactants. For example, a sulfate surfactant, such as alkoxylated and/or non-alkoxylated sulfates, and/or sulfonated surfactants, for example, alkyl benzene sulfonates and water-soluble salts thereof.

Examples of alkoxylated alkyl sulfates comprise ethoxylated, propoxylated, ethoxylated/propoxylated and butoxylated alkyl sulfate surfactants. Preferably, the alkyl group contains between 7 and 20 carbon atoms.

Other anionic surfactants which can be used in the present invention are water-soluble salts of paraffinic sulfonates and secondary alkansulfonates containing 7 to 20 carbon atoms; alkyl glycyl ether sulfonates, in particular alcohol ethers having 7 to 20 carbon atoms.

Alternatively, mixtures of alkyl benzene sulfonates can be used with paraffin sulfonates, secondary alkansulfonates and alkyl glycyl ether sulfonates.

Other anionic surfactants useful for the present invention are water-soluble salts of carboxylic acids, such as for example lauroyl sarcosinate or myristoyl sarcosinate.

Anionic surfactants are preferably water-soluble salts of alkaline metals, ammonium salts and alkylammonium salts.

### Non-ionic surfactants

Non-exhaustive examples of non-ionic surfactants suitable for the present invention comprise fatty alcohol alkoxylates and alkyl amine oxides.

Fatty alcohol alkoxylates can be selected from alkoxylated alcohols and alkoxylated alkylphenols of formula

RO-(E)ₑ-(P)ₚ-H,

wherein
R is selected from the group consisting of linear or branched aliphatic hydrocarbons comprising 8 to 20 carbon atoms and linear or branched alkylphenyls wherein the alkyl group contains 8 to 20 carbon atoms;
E is ethylene oxide and
P is propylene oxide,
"e" and "p" represent the average degree of ethoxylation and propoxylation, respectively, and range between 0 and 24 (the sum e + p being equal to at least 1).

Alkyl amine oxides are preferably of formula R₁R₂R₃NO where, each R₁, R₂ and R₃ group is independently an alkyl C1-C30 group, preferably an alkyl C1-C20 group, more preferably an alkyl C1-C18 group, and even more preferably R₁ and R₂ are methyl groups and R₃ is a C8-C18 hydrocarbon chain.

### Cationic surfactants

Non-exhaustive examples of cationic surfactants suitable for the present invention comprise quaternary ammonium surfactants which can have up to 26 carbon atoms, quaternary ammonium alkoxylated surfactants such as hydroxyethyl dimethyl quaternary ammonium and hydroxyethyl lauryl dimethyl quaternary ammonium.

### Zwitterionic surfactants

Non-exhaustive examples of zwitterionic surfactants suitable for the present invention comprise secondary and tertiary amine derivatives, heterocyclic secondary and tertiary amine derivatives, and quaternary ammonium salts derivatives and quaternary phosphonium or ternary sulfonium salt compounds.

### Ampholytic and/or amphoteric surfactants

Non-exhaustive examples of ampholytic and/or amphoteric surfactants suitable for the present invention comprise secondary and tertiary aliphatic amine derivatives or heterocyclic aliphatic derivatives of secondary and tertiary amines wherein the aliphatic radical can be linear or branched. One of the aliphatic substituents can contain at least 8 carbon atoms, for example 8 to 18 carbon atoms, and at least one contains a water-soluble anionic group, for example a carbonyl, a sulfonate, or a sulfate.

The presence of at least one surfactant selected from the group consisting of soluble salts of (primary or secondary) alkyl sulfates, soluble salts of (primary or secondary) alkyl sulfonates, paraffin sulfonates and secondary alkansulfonates, linear or branched ethoxylated alcohols, alkyl amine oxides or quaternary ammonium surfactants is preferred.

### Optional ingredients

The composition according to the invention can comprise further optional ingredients such as perfumes, bleach-stable surfactants, organic and inorganic alkalis, pigments, dyes, optical whiteners, solvents, chelating agents, radical neutralizers, and mixtures thereof.

### BEST MODE FOR CARRYING OUT THE INVENTION

Further characteristics of the present invention will result from the description which follows of some merely illustrative and non-limiting examples.

### EXAMPLES

The benefit linked to the greater hydrophobia associated with the application of the composition of the invention can be measured in several ways.

In all instances reported below, the procedure for treating the surfaces is the following: the desired surface is treated with a composition according to the invention by applying 1 ml of product with a sponge for every 100 cm² of surface. The treated surface is then rinsed with running water for 10 seconds.

The efficacy evaluation of the composition is carried out according to one of the three following methods:

### METHOD A

This method consists in observing the water drainage from the treated surface. The surface treated with products free from surface-modification polymer tends to draw water which, in turn, tends not to drain efficiently, leaving a uniform film or marks on the surface; on the other hand, the addition of the polymer as in the composition of the present invention causes a fast and sharp drainage of the water.

The surface is typically a ceramic tile for home use, but other surfaces such as glass, mirror, china, steel, plastic, etc. can also be tested.

The 0-4 evaluation scale for method A is defined as follows:
- 0- product with polymer is identical to the product without polymer in terms of water drainage;
- 1- product with polymer is slightly better than the same product without polymer in terms of water drainage;
- 2- product with polymer is slightly better than the same product without polymer: the water somehow drains more rapidly;
- 3- product with polymer is better than the same product without polymer: the water drains more rapidly;
- 4- product with polymer is better than the same product without polymer: the water flows out more rapidly and evenly.

### METHOD B

This method consists in evaluating the appearance of the surface subject to the same treatment described for METHOD A after drying, visually evaluating the amount of watermarks after one or more treatment and rinse cycles (single cycle or multicycle); the comparison is made with the same composition without polymer.

The 0-4 evaluation scale for method B is defined as follows:
- 0- product with polymer is identical to the product without polymer in terms of remaining residues/watermarks;
- 1- product with polymer is slightly better than the same product without polymer in terms remaining residues/watermarks;
- 2- product with polymer is slightly better than the same product without polymer: less watermarks remain;
- 3- product with polymer is better than the same product without polymers: far less watermarks remain;
- 4- product with polymer is better than the same product without polymer: no watermarks remain.

### METHOD C

This method provides for measuring the contact angle of the demineralized water on a surface treated with a composition of the invention compared with the contact angle of the demineralized water on a surface treated with a composition free from polymer after washing, rinsing and drying.

The results are expressed as the degree of increase in the contact angle.

The compositions of the invention were compared with identical compositions containing different polymers, particularly, PVP (PVP K60, Ashland), a polyacrylate polymer (Syntran 1560, Interpolymer) and a silicone polymer (Silwet 7693, Momentive). The polymers of the invention used have the following compositions:

### POLYMER 1

Diallyldimethylammonium chloride (DADMAC) 53.5%, polyethyleneglycol-vinyloxy-butylether 5000 g/mol (100% active) (V-PEG 5000) 9.8%, N,N-dimethylacrylamide (DMAA) 35%, sodium salt of 2-acryloylamino-2-methylpropanesulfonic acid (AMPS-Na) 1.7%

### POLYMER 2

### DADMAC 55.1%, V-PEG 5000 9.9%, DMAA 35%

The results of the tests performed are reported in Table 1. It is clear that none of the polymers in the known art lead to an effect since they are all unstable in the presence of a hypohalite and under strongly basic conditions. On the contrary, the composition of the invention is stable and shows the desired benefits already at low concentrations.

The compositions which showed the best desired performances were then aged at 50°C for two weeks and stored at 25°C for six months. Table 2 shows the results obtained for the aged products.

The composition of the invention was also tested in spray formulations, gel formulations, and viscous formulations. The results obtained are reported in Tables 3, 4, and 5, respectively.

Ultimately, the efficacy evaluations obtained with the composition of the invention were compared with those of the same composition comprising hydrogen peroxide and are reported in Table 6. As it is possible to note, the composition comprising a hypohalite shows far higher performances than those related to a composition with hydrogen peroxide.

**Table 6**

| **Ingredient (% w/w)** | **Ex. D1** | **Ex. D2** |
|---|---|---|
| Sodium hypochlorite | 1.330 | - |
| Hydrogen peroxide | - | 4.000 |
| Sodium hydroxide | 1.000 | |
| Ethoxylated linear secondary alcohol | - | 0.770 |
| Sodium C9 alkylsulfate | 0.770 | - |
| Fatty acid | 0.599 | 0.099 |
| Natural C12/C14 amine oxide | 1.710 | 1.710 |
| Sodium silicate | - | 0.500 |
| Sodium carbonate | - | - |
| Etidronic acid | - | 0.3 |
| Periodic acid | 0.0106 | - |
| perfume | 0.160 | 0.160 |
| Green dye | 0.0029 | - |
| Polymer 1 | 0.03 | 0.03 |

| **Results** | | |
|---|---|---|
| METHOD A | 4 | 3 |
| METHOD B | 4 | 2 |

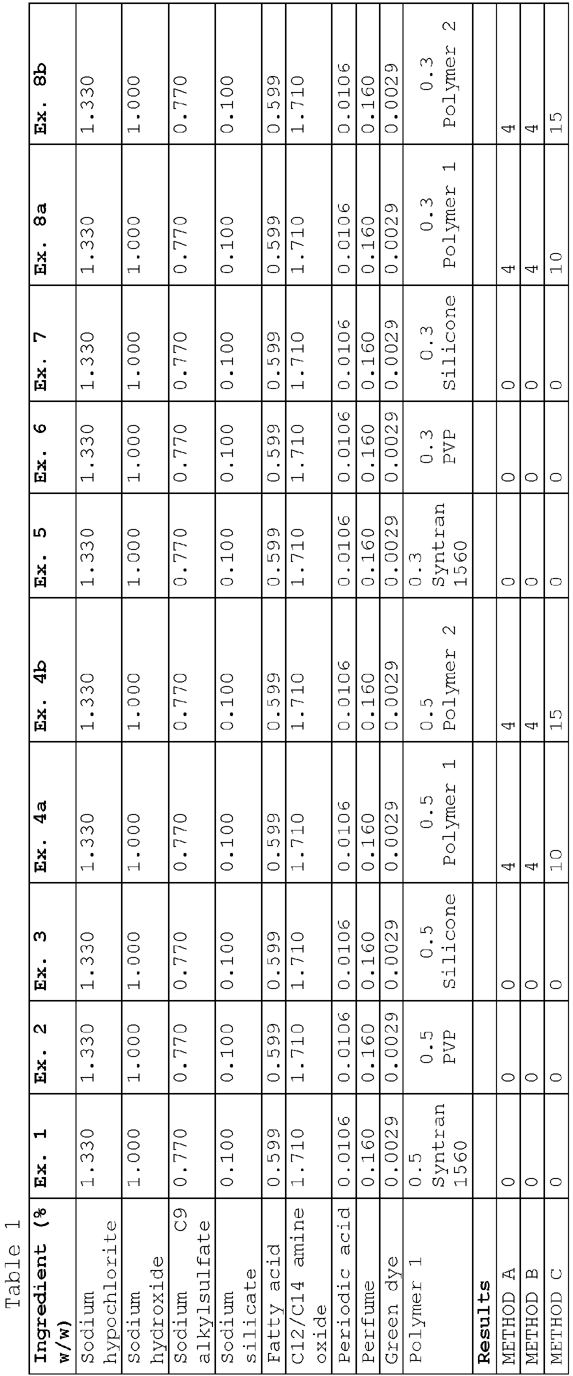

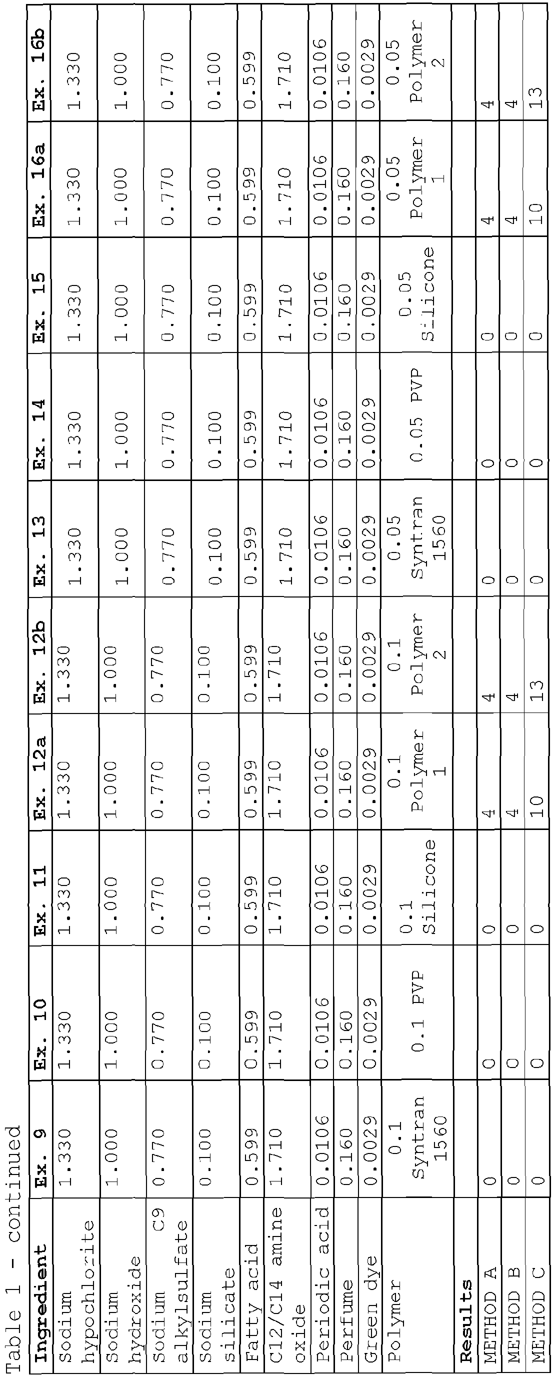

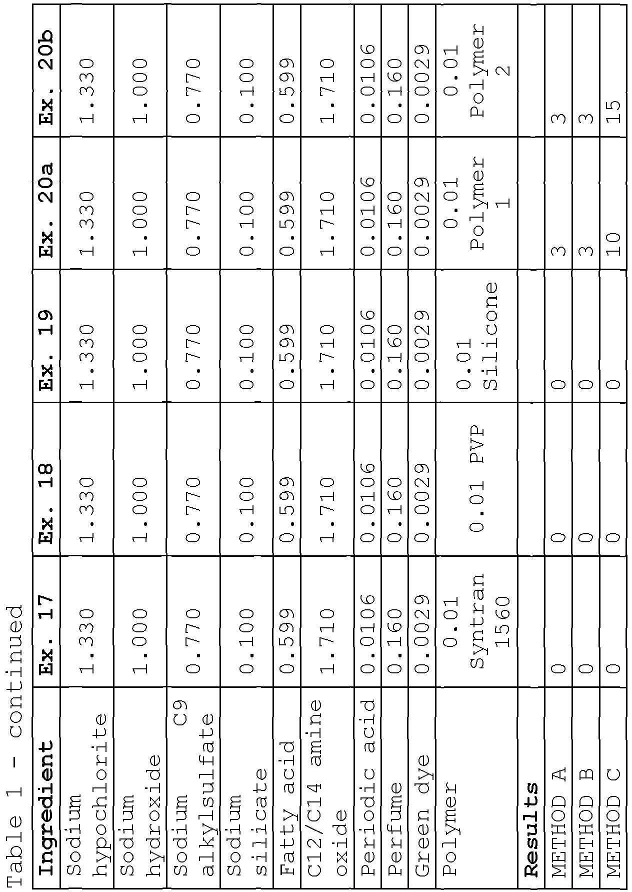

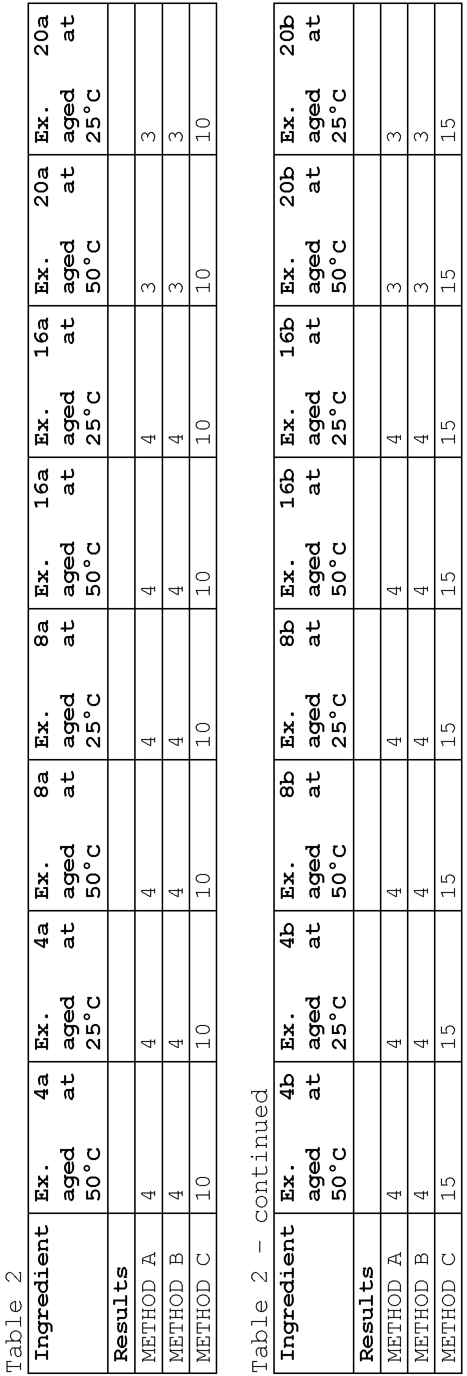

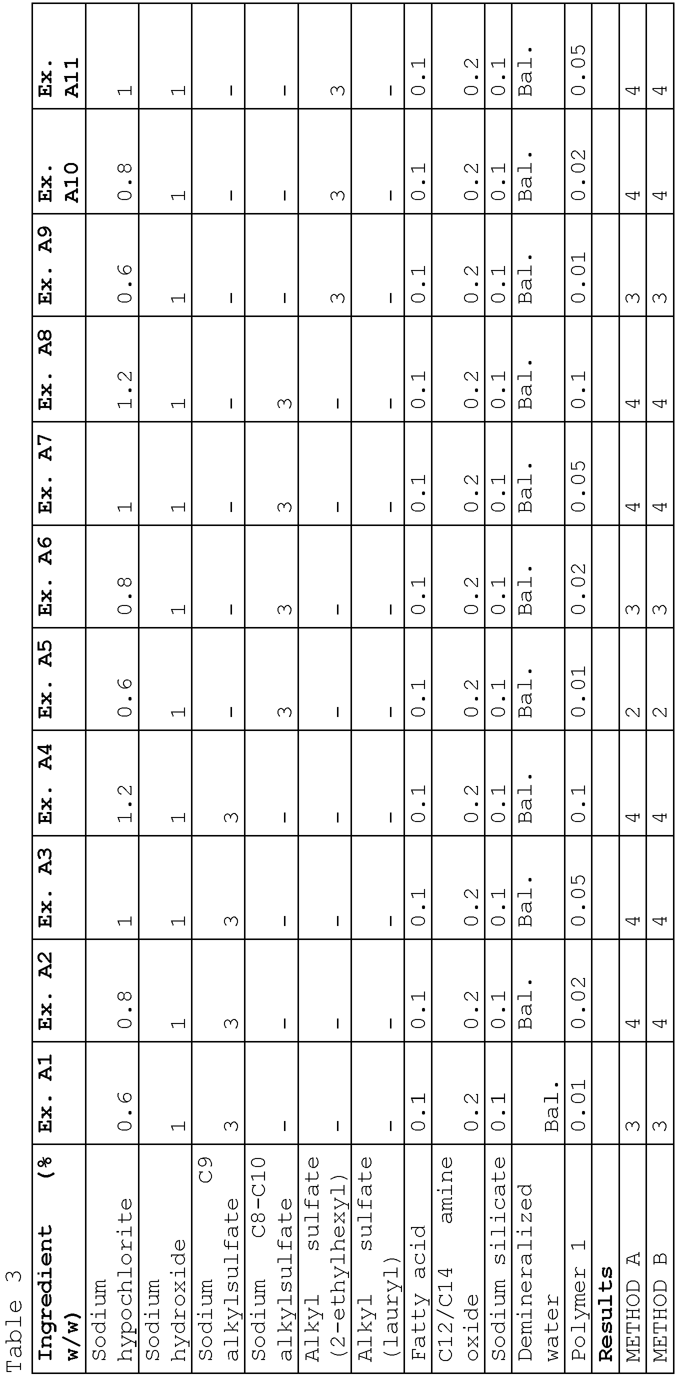

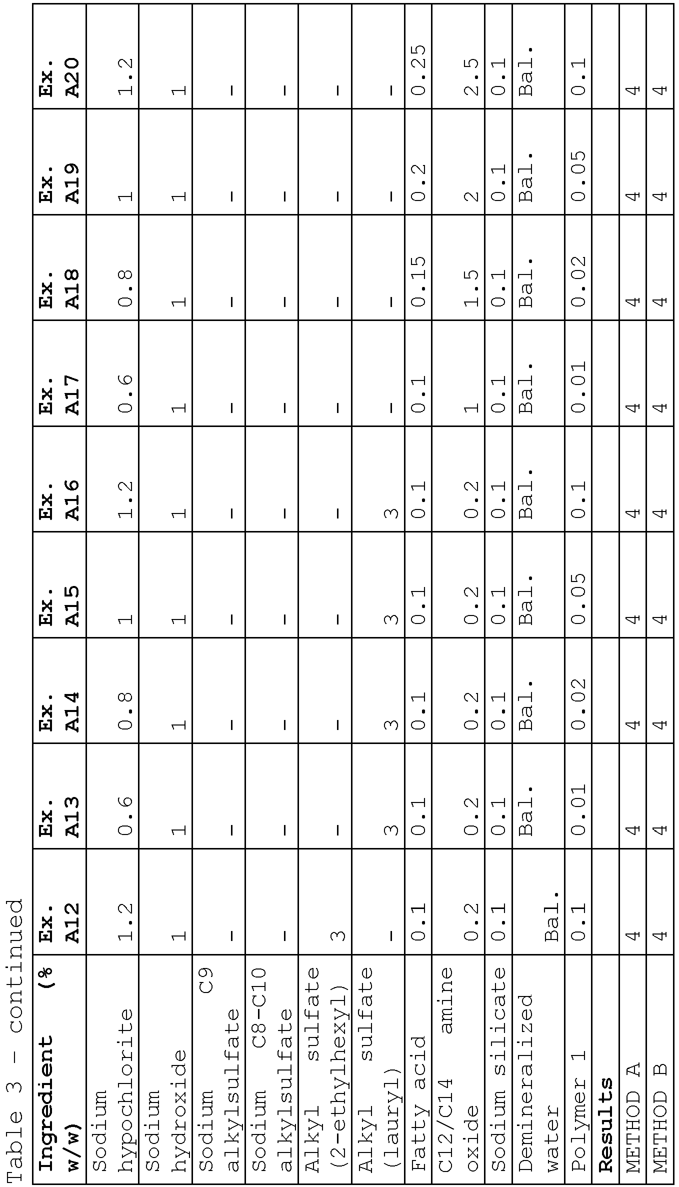

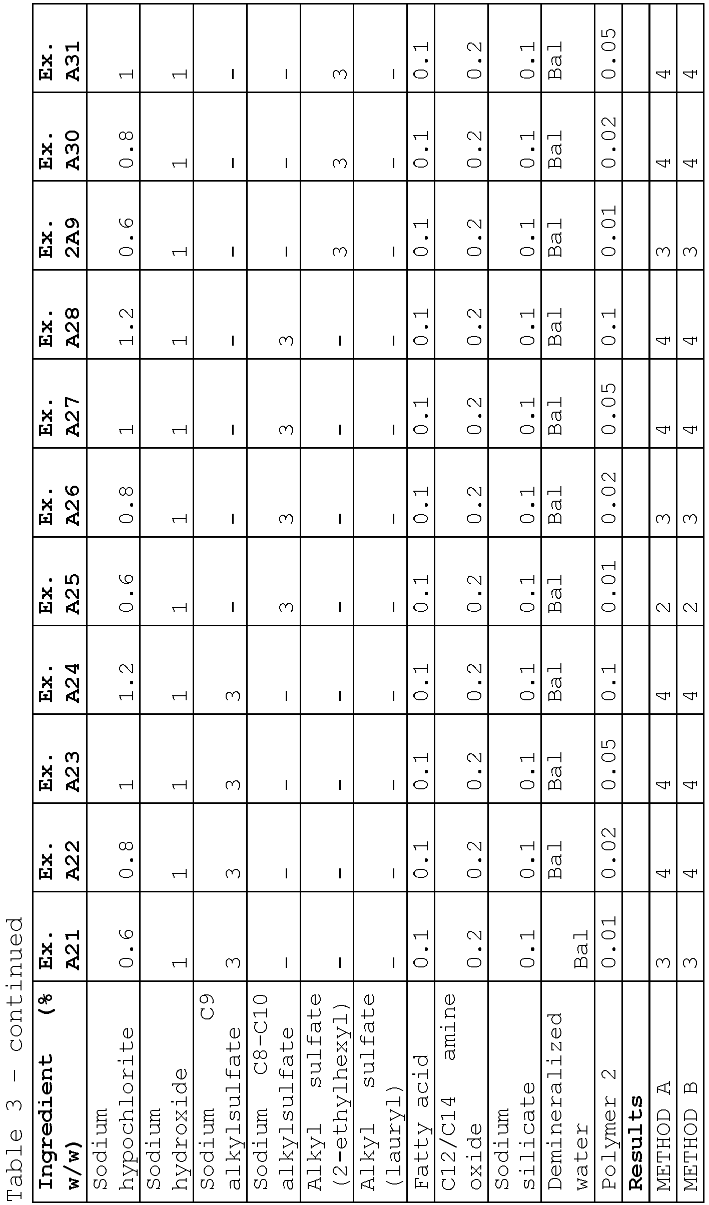

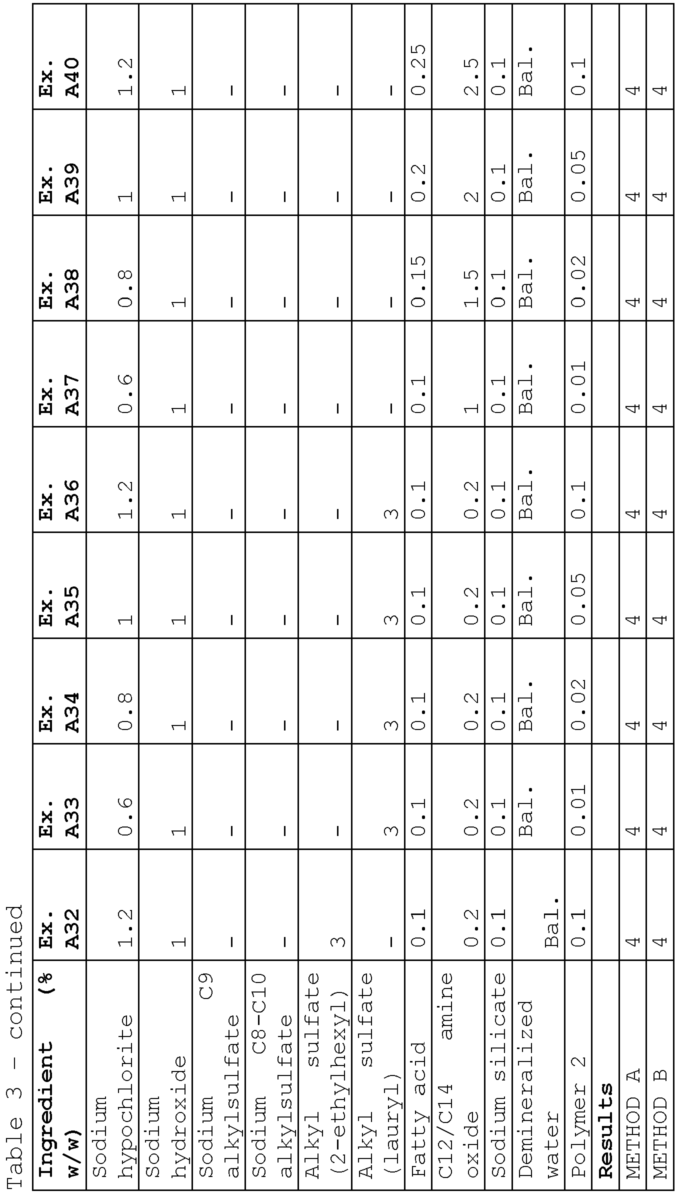

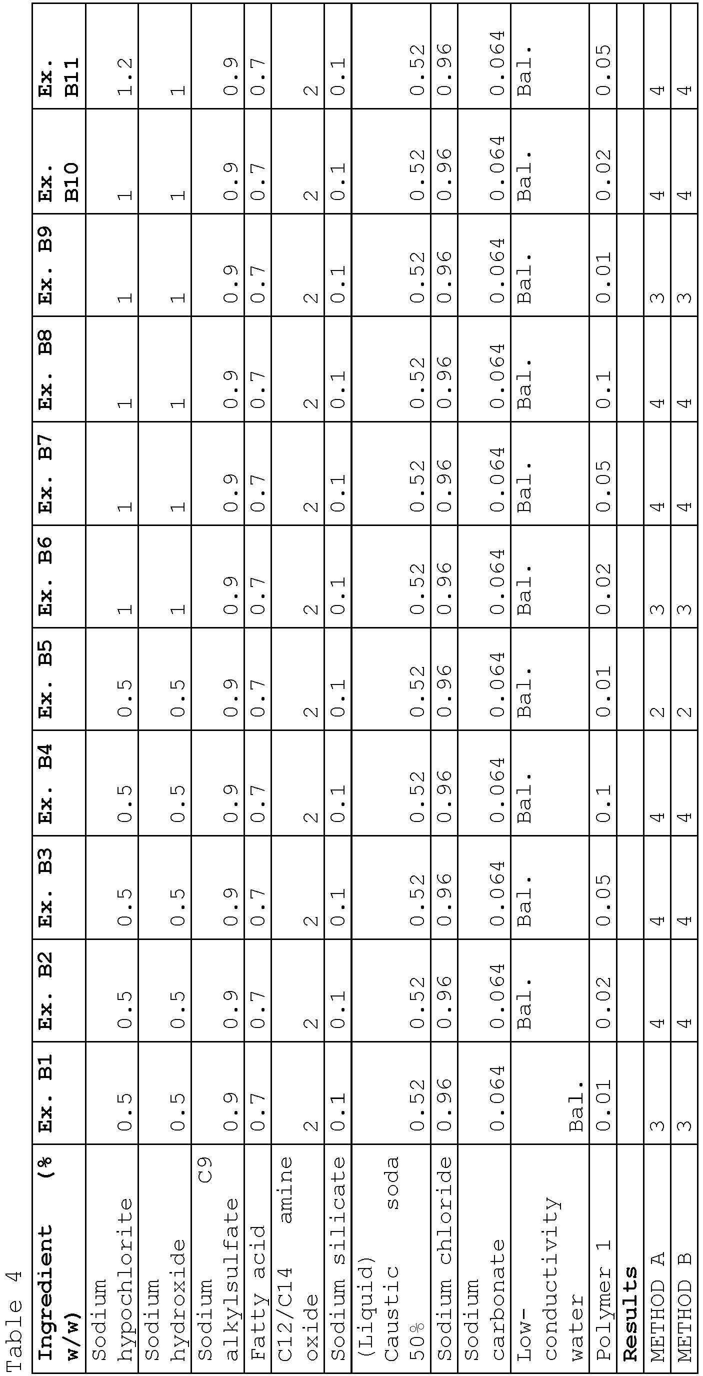

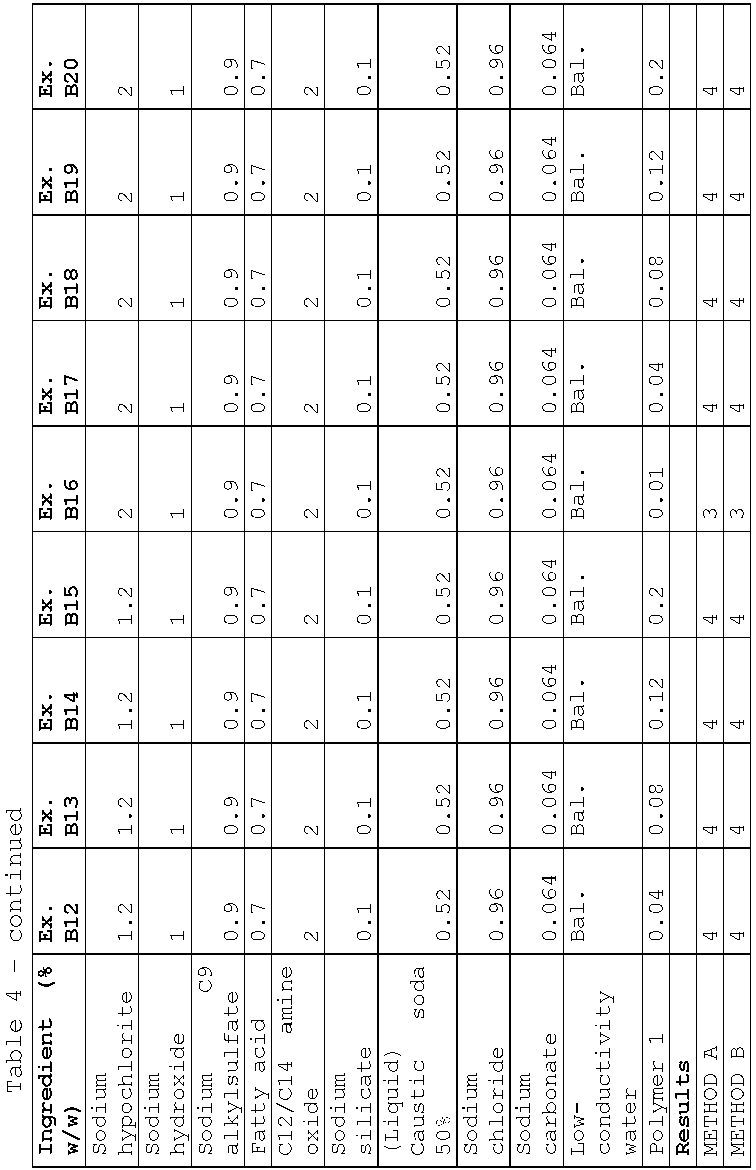

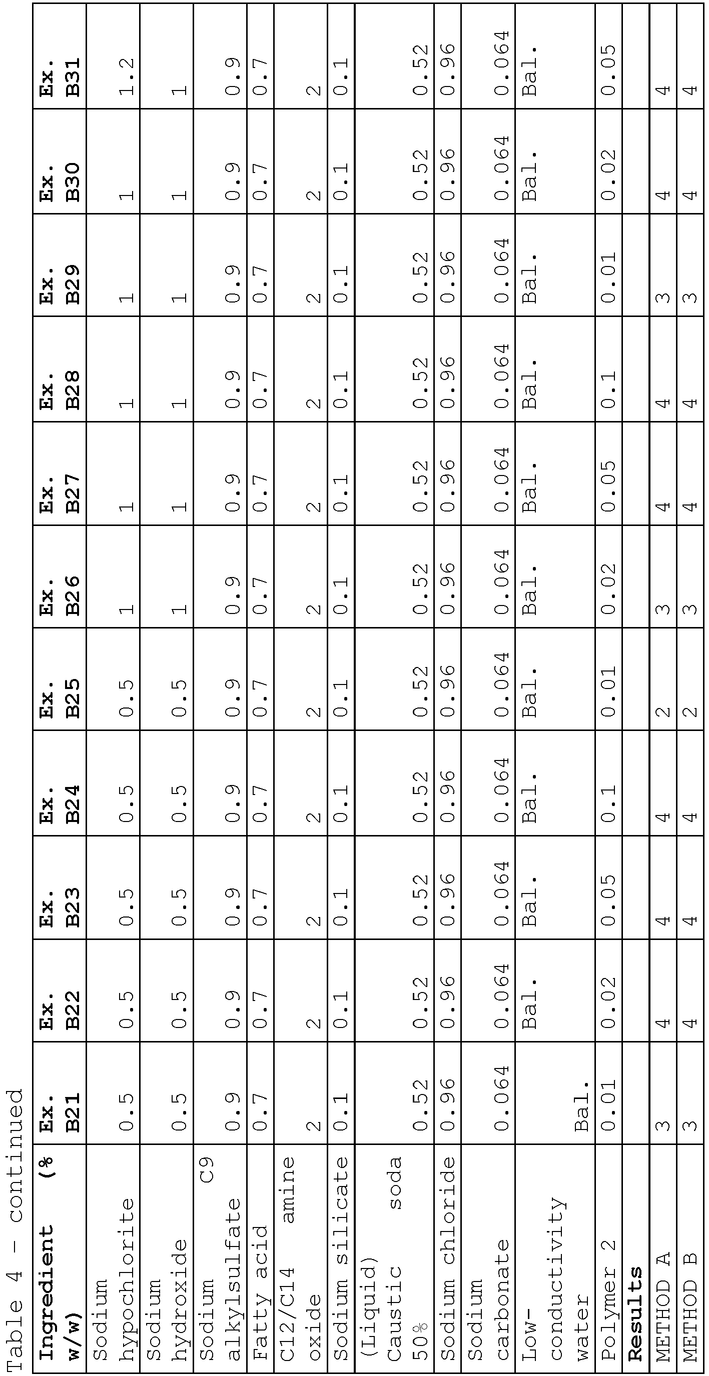

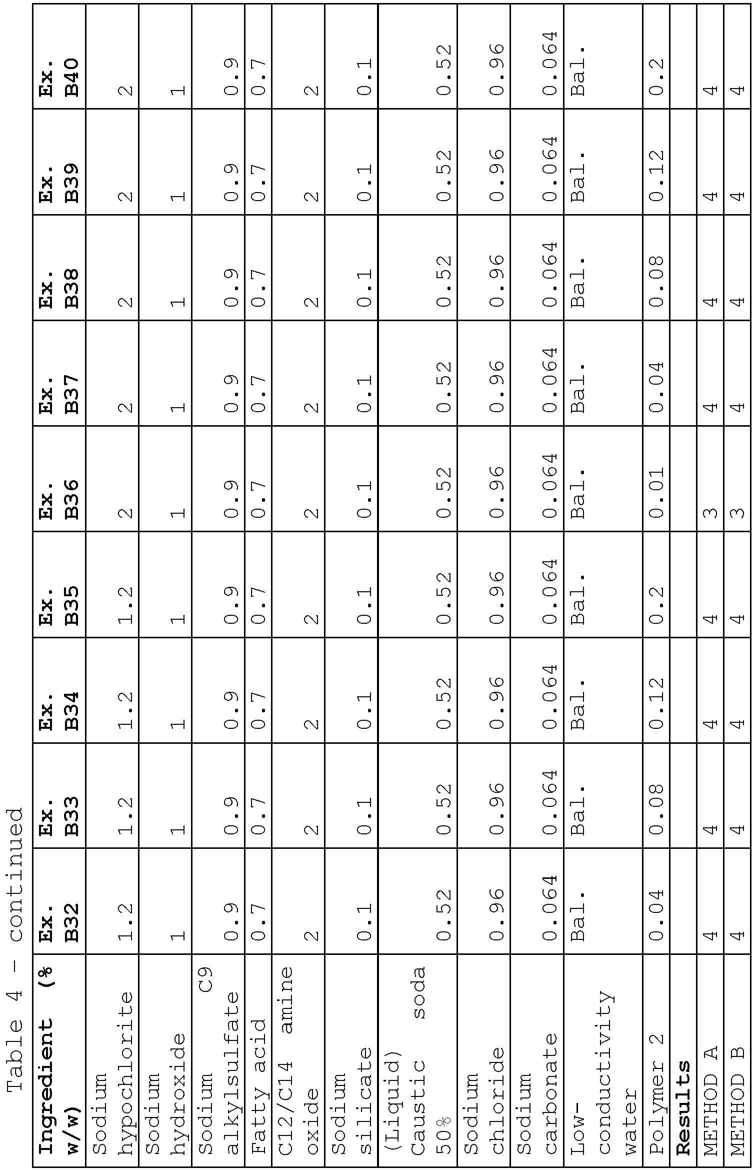

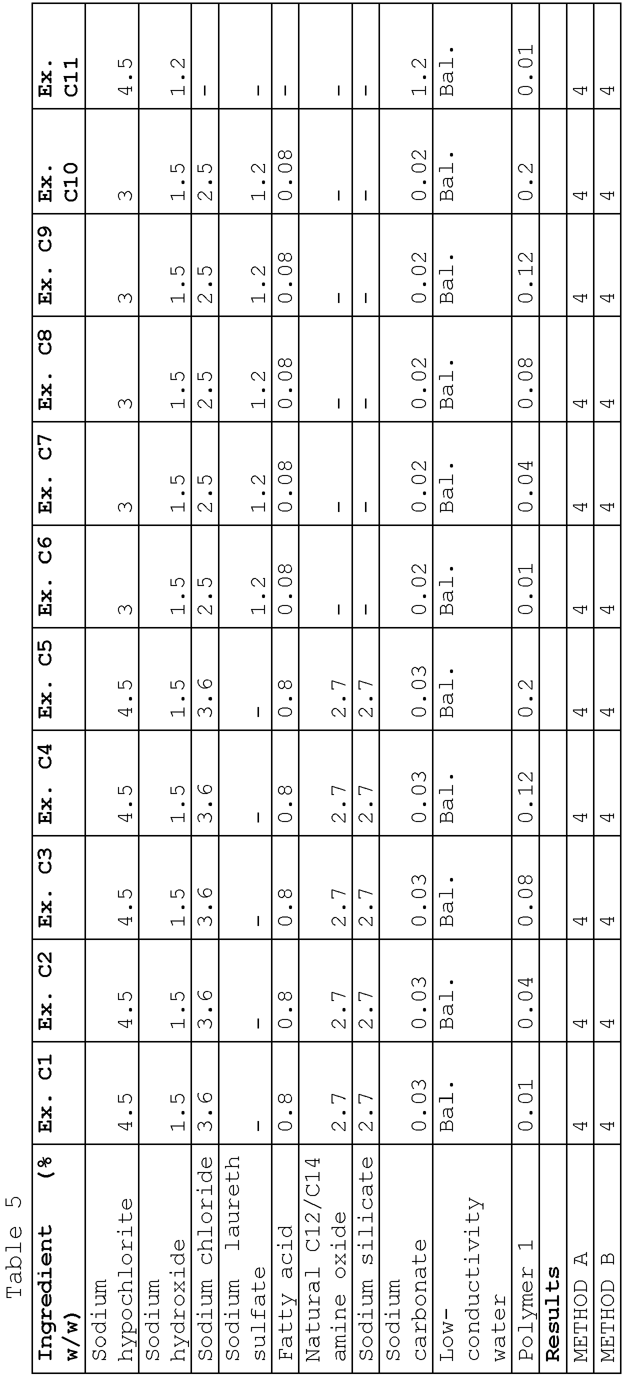

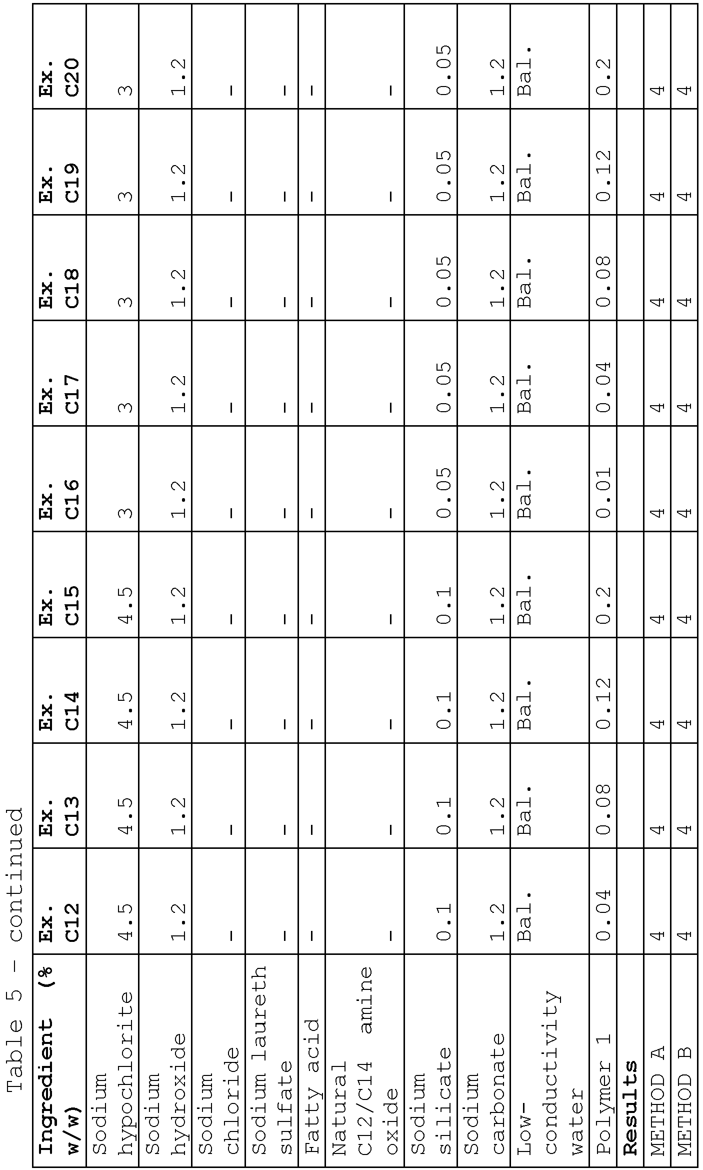

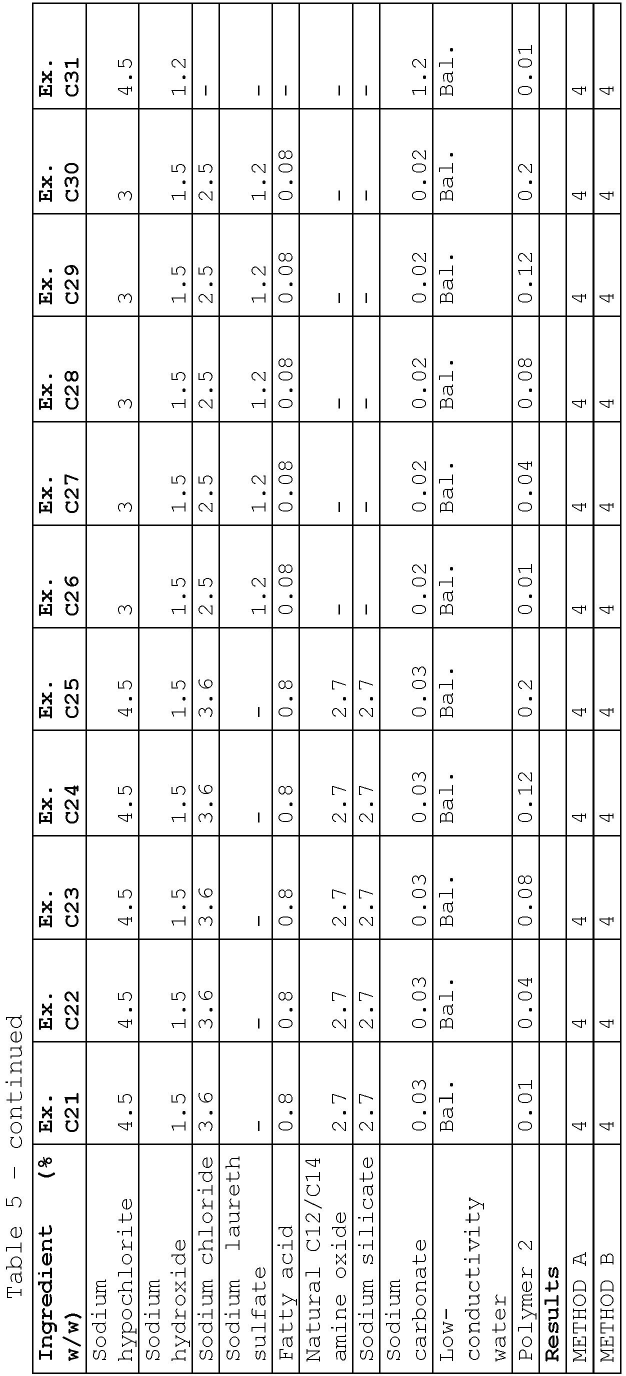

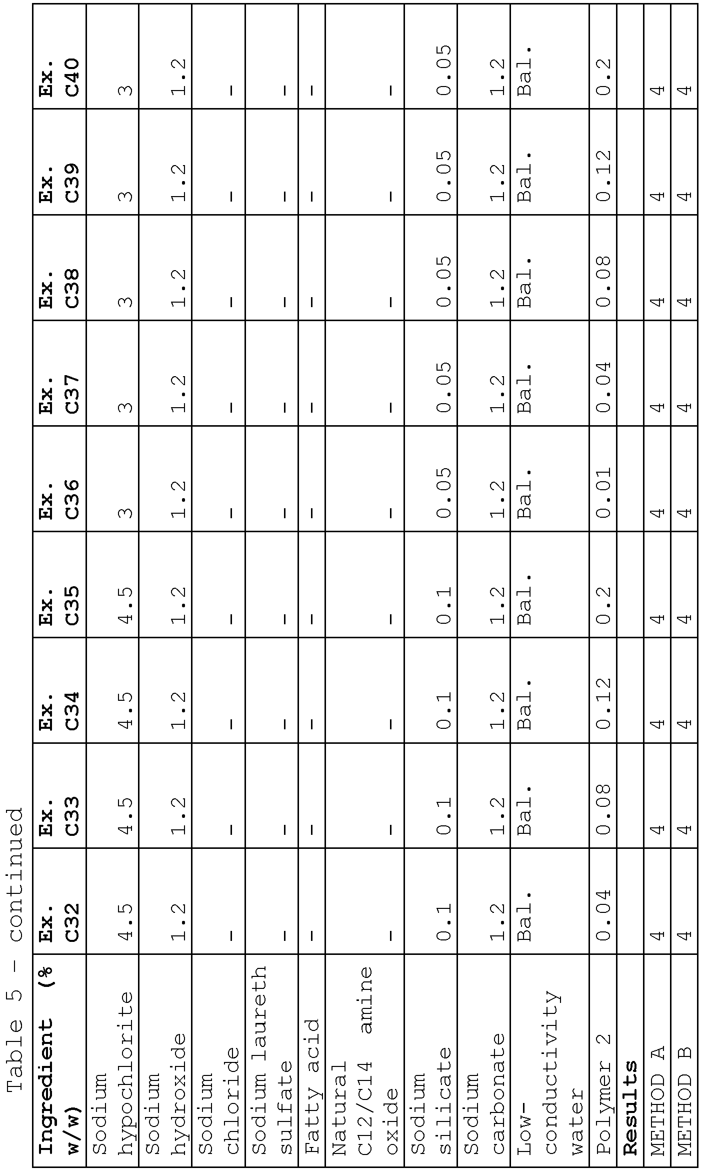

## Claims

1. A detergent composition having a pH equal to or greater than 12, comprising a hypohalite and a copolymer chosen from the group consisting of COPOL-1 and COPOL-2 wherein:
**COPOL-1** is a copolymer obtainable by copolymerization of at least components a), b) and c), wherein the **COPOL-1** copolymer comprises:
- 25.0 to 80 mol% of one or more cationic monomers a) selected from the group consisting of (meth)acrylamide and diallyldimethylammonium chloride cationic monomers, and
- 0.1 to 50.0 mol% of one or more polyethylene glycol macromonomers b), and
- 15.0 to 74.9 mol% of one or more neutral acrylamide monomers c);
and wherein **COPOL-2** is a copolymer comprising:
- 0.1 to 99.4 mol% of one or more cationic structural units (A) and
- 0.4 to 4.5 mol% of one or more macromonomeric structural units (B);
wherein the cationic structural unit (A) is represented by the general formulas (I) and/or (II) 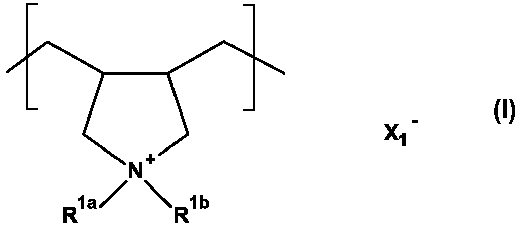 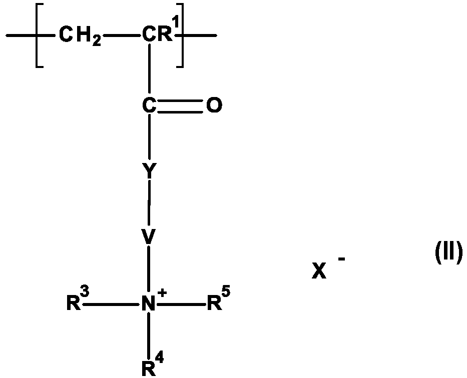
wherein R¹ and R^{1a} are the same or different, and independently selected from H and methyl;
R^{1b}, R³, R⁴ and R⁵ are the same or different, and independently selected from the group consisting of H, aliphatic hydrocarbon having 1 to 20 carbon atoms, cycloaliphatic hydrocarbon having 5 to 20 carbon atoms, aryl having 6 to 14 carbon atoms and/or polyethylene glycol;
Y is the same or different, and selected from the group consisting of O, NH and NR³;
V is the same or different, and selected from the group consisting of -(CH₂)ₓ- 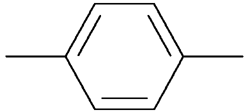 and 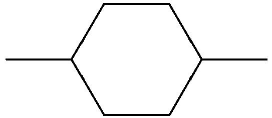
x is the same or different and it is an integer ranging between 1 and 6,
X and X₁ are the same or different, and independently chosen from the group consisting of halogen, C₁₋₄-alkyl sulfate and C₁₋₄-alkyl sulfonate;
and wherein the macromonomeric structural unit (B) is represented by the formula (III) 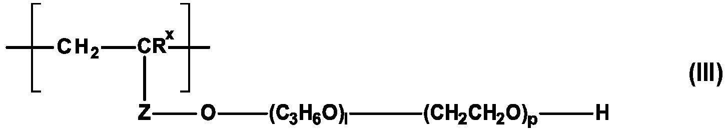
wherein R^{x} is the same or different, and is selected from the group consisting of H and methyl;
Z is the same or different, and selected from the group consisting of C=O and O(CH₂)₄;
l is, in a molar ratio, a number ranging between 0 and 7; and
p is, in a molar ratio, a number ranging between 1 and 150.

2. The detergent composition according to Claim 1, **characterized in that** it comprises the COPOL-1 copolymer, wherein said cationic (meth)acrylamide monomers of component a) are selected from the group consisting of monomers of formula (IV) 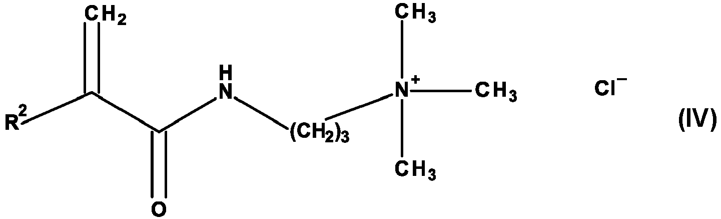 wherein R² is hydrogen or methyl.

3. The detergent composition according to Claim 1, **characterized in that** it comprises the COPOL-1 copolymer, wherein said cationic (meth)acrylamide monomers of component a) are selected from the group consisting of diallyldimethylammonium chloride and (3-methacrylamidopropyl)trimethylammonium chloride.

4. The detergent composition according to Claim 1, **characterized in that** it comprises the COPOL-1 copolymer, wherein said polyethylene glycol macromonomers of component b) are selected from the group consisting of monomers of formula (V)
H₂C=CR^{y}-W-O-(C₃H₆O)_{g}-(CH₂CH₂O)ₕ-H (V)
wherein R^{y} is selected from the group consisting of H and methyl;
W is C=O or O(CH₂)₄,
g is, in a molar ratio, a number ranging between 0 and 7; and
h is, in a molar ratio, a number ranging between 1 and 150.

5. The detergent composition according to Claim 4, **characterized in that** it comprises the COPOL-1 copolymer, wherein in formula (V):
i) R^{y} is H, g is 0 and h, in a molar ratio, ranges between 1 and 150, when W is O(CH₂)₄ or
ii) R^{y} is H or methyl, g, in a molar ratio, ranges between 1 and 7 and h, in a molar ratio, ranges between 1 and 150 when W is C=O.

6. The detergent composition according to any one of Claims 1 to 5, **characterized in that** it comprises the COPOL-1 copolymer, wherein said polyethylene glycol macromonomers of component b) are selected from the group consisting of monomers of formula (V-A) 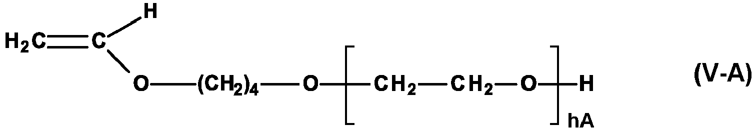
wherein hA, in a molar ratio, is a number ranging between 1 and 150, and monomers of formula (V-B) 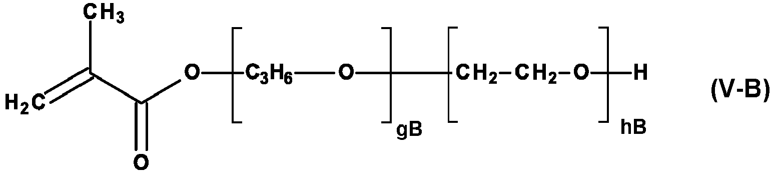
wherein gB, in a molar ratio, is a number ranging between 1 and 7 and hB, in a molar ratio, is a number ranging between 1 and 150.

7. The detergent composition according to any one of Claims 1 to 6, **characterized in that** it comprises the COPOL-1 copolymer, wherein said neutral acrylamide monomers of component c) are selected from the group consisting of monomers of formula (VI) 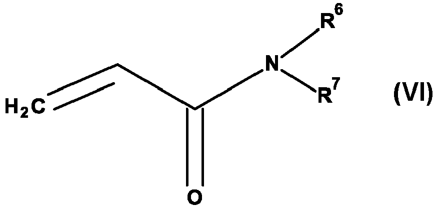 wherein R⁶ and R⁷ are the same or different, and independently selected from the group consisting of H and an aliphatic hydrocarbon having 1 to 20 carbon atoms.

8. The detergent composition according to any one of Claims 1 to 7, **characterized in that** it comprises the COPOL-1 copolymer, wherein said neutral acrylamide monomers of component c) are selected from the group consisting of acrylamide, N-ethylacrylamide, N,N-dimethylacrylamide, N-tert-butylacrylamide and N-isopropylacrylamide.

9. The detergent composition according to any one of Claims 1 to 8, **characterized in that** it comprises the COPOL-1 copolymer which is obtainable by radical polymerization of at least components a), b) and c), wherein, in the copolymerization, said component a) is used in an amount of between 25 and 80 mol%, said component b) is used in an amount of between 0.1 and 4.4 mol%, and said component c) is used in an amount of between 15.6 and 74.9 mol%.

10. The detergent composition according to Claim 1, **characterized in that** it comprises the COPOL-2 copolymer, wherein said structural unit a) comprises the polymerization product of at least one monomeric species selected from the group consisting of [2-(acryloyloxy)ethyl]trimethylammonium chloride, [2-(acryloylamino)ethyl]trimethylammonium chloride, [2-(acryloyloxy)ethyl]trimethylammonium methosulfate, [2-(methacryloyloxy)ethyl]trimethylammonium chloride or methosulfate, [3-(acryloylamino)propyl]trimethylammonium chloride, [3-(methacryloylamino)propyl]trimethylammonium chloride and diallyldimethylammonium chloride (DADMAC).

11. The detergent composition according to Claim 1, **characterized in that** it comprises the COPOL-2 copolymer, wherein said macromonomeric structural units (B) of formula (III) are obtainable by polymerization of at least one monomeric species selected from the group consisting of polyethylene glycol vinyloxy butyl ether, polyethylene glycol co-polypropylene glycol vinyloxy butyl ether, wherein l, in a molar ratio, is a number ranging between 1 and 7, polyethylene glycol (meth)acrylate and polyethylene glycol-co-polypropylene glycol (meth)acrylate, wherein l, in a molar ratio, is a number ranging between 1 and 7.

12. The detergent composition according to any one of Claims 1 or 11, **characterized in that** it comprises the COPOL-2 copolymer, wherein in said macromonomeric structural units of formula (III):
i) R^{x} is H, l is 0 and p, in a molar ratio, is a number ranging between 1 and 150, when Z is O(CH₂)₄, or
ii) R^{x} is the same or different, and is selected from the group consisting of H and methyl, l, in a molar ratio, is a number ranging between 1 and 7 and p, in a molar ratio, is a number ranging between 1 and 150, when Z is C=O.

13. The detergent composition according to any one of Claims 1, 11 or 12, **characterized in that** it comprises the COPOL-2 copolymer, further comprising one or more structural units C) which are different from structural units A) and B), and are the product of polymerization of at least one monomeric species selected from the group consisting of non-cationic acrylamides, non-cationic methacrylamides, and N-vinyl substituted lactams having a 5-7-atom ring core.

14. The detergent composition according to Claim 13, **characterized in that** it comprises the COPOL-2 copolymer wherein said monomeric units C) are selected from the group consisting of polymerization products of at least one N-vinyl substituted lactam, having a 5-7-atom ring core, and structural units of general formula (VII) or (VIII): 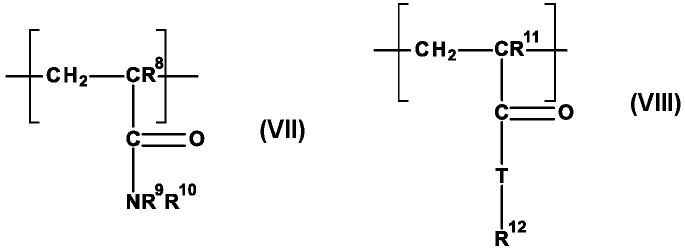
wherein R⁸ is the same or different, and is selected from the group consisting of H and methyl,
R⁹ and R¹⁰ are each the same or different, and independently selected from the group consisting of H, an aliphatic hydrocarbon having 1 to 20 carbon atoms, a cycloaliphatic hydrocarbon having 5 to 20 carbon atoms, an aryl having 6 to 14 carbon atoms, an alkylaryl having 7 to 14 carbon atoms, a linear or branched monohydroxyalkyl having 1 to 5 carbon atoms, and a polyethylene glycol;
R¹¹ is the same or different, and is selected from the group consisting of H and methyl,
T is the same or different, and is selected from the group consisting of NH-(CⱼH₂ⱼ) with j=1, 2, 3 or 4; and
R¹² is the same or different, and is selected from the group consisting of OH, SO₃H, PO₃H₂, O-PO₃H₂ and para-substituted C₆H₄-SO₃H.

15. The detergent composition according to Claim 13 or 14, **characterized in that** it comprises the COPOL-2 copolymer, wherein said structural units C) are obtainable by polymerization of at least one monomeric species selected from the group consisting of acrylamide, methacrylamide, N-methacrylamide, N,N-dimethylacrylamide, N-ethylacrylamide, N-cyclohexylacrylamide, N-benzylacrylamide, N-methyloylacrylamide, N-isopropylacrylamide and N-tert-butylacrylamide.

16. The detergent composition according to any one of Claims 13-15, **characterized in that** it comprises the COPOL-2 copolymer, further comprising one or more structural units D) selected from the group consisting of structural units having general formula (IX) or (X): 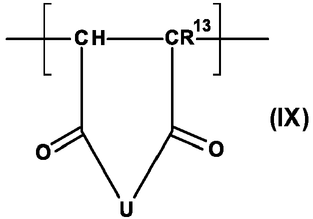
wherein R¹³ is the same or different, and is selected from the group consisting of H and methyl,
U is the same or different, and is selected from the group consisting of O and NH, 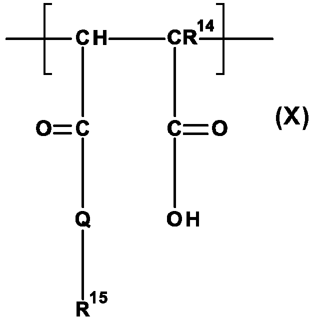
wherein R¹⁴ is the same or different, and is selected from the group consisting of H and methyl,
Q is the same or different, and is selected from the group consisting of O and NH,
R¹⁵ is the same or different, and is chosen from the group consisting of H, (CₖH2ₖ)-SO₃H with k=0, 1, 2, 3 or 4; (C₆H₄)-SO₃H; (C₆H₄)-PO₃H₂; (C₆H₄)-OPO₃H₂ and (C_{q}H_{2q})ₑ-O(A'O)ᵣ-R¹⁶ with q=0, 1, 2, 3 or 4; e=0, 1, 2, 3 or 4, A'=C_{x'}H_{2x'} con x'=2, 3, 4 o 5, r=an integer from 1 to 350, and R¹⁶ is the same or different, and is selected from the group consisting of a linear or branched alkyl having 1 to 4 carbon atoms.

## Patentansprüche

1. Eine Reinigungszusammensetzung mit einem pH-Wert von 12 oder mehr, umfassend ein Hypohalogenit und ein Copolymer, das aus der Gruppe ausgewählt ist, die aus COPOL-1 und COPOL-2 besteht, wobei:
COPOL-1 ein Copolymer ist, das durch Copolymerisation von mindestens den Komponenten a), b) und c) erhältlich ist, wobei das COPOL-1-Copolymer folgendes umfasst:
- 25,0 bis 80 Mol-% eines oder mehrerer kationischer Monomere a) ausgewählt aus der Gruppe der kationischen Monomere (Meth)acrylamid und Diallyldimethylammoniumchlorid, und
- 0,1 bis 50,0 Mol-% eines oder mehrerer Polyethylenglykol-Makromonomere b), und
- 15,0 bis 74,9 Mol-% eines oder mehrerer neutraler Acrylamidmonomere c) ;
und wobei COPOL-2 ein Copolymer ist, das Folgendes umfasst:
- 0,1 bis 99, 4 Mol-% einer oder mehrerer kationischer Struktureinheiten (A) und
- 0,4 bis 4,5 Mol-% von einer oder mehreren makromonomeren Struktureinheiten (B) ;
wobei die kationische Struktureinheit (A) durch die allgemeinen Formeln (I) und/oder (II)dargestellt wird 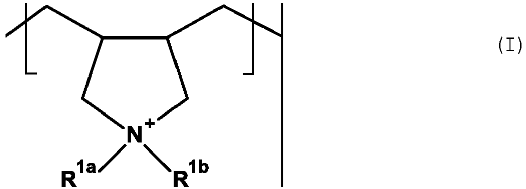 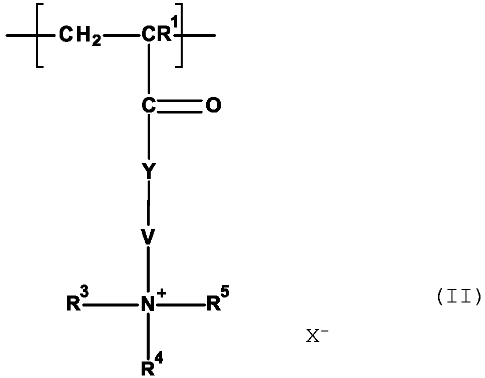
Worin R¹ und R² gleich oder verschieden sind und unabhängig voneinander aus H und Methyl ausgewählt sind;
R^{1b}, R³, R⁴ und R⁵ sind gleich oder verschieden und unabhängig voneinander ausgewählt aus der Gruppe bestehend aus H, aliphatischem Kohlenwasserstoff mit 1 bis 20 Kohlenstoffatomen, cycloaliphatischem Kohlenwasserstoff mit 5 bis 20 Kohlenstoffatomen, Aryl mit 6 bis 14 Kohlenstoffatomen und/oder Polyethylenglykol;
Y ist gleich oder verschieden und ausgewählt aus der Gruppe bestehend aus O, NH und NR³;
V ist gleich oder verschieden und ausgewählt aus der Gruppe bestehend aus -(CH₂)ₓ- 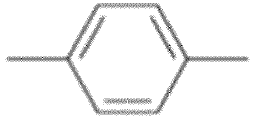 und 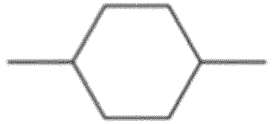
x ist gleich oder verschieden und ist eine ganze Zahl zwischen 1 und 6,
X und X₁ sind gleich oder verschieden und unabhängig voneinander ausgewählt aus der Gruppe bestehend aus Halogen, C₁₋₄ -Alkylsulfat und C₁₋₄ -Alkylsulfonat;
und wobei die makromonomere Struktureinheit (B) durch die Formel (III) dargestellt wird 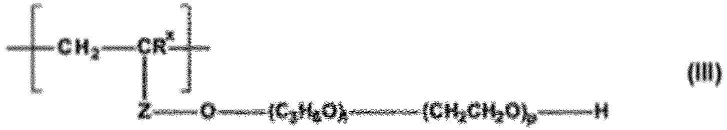
wobei R^{x} gleich oder verschieden ist und ausgewählt wird aus der Gruppe bestehend aus H und Methyl;
Z ist gleich oder verschieden und ausgewählt aus der Gruppe bestehend aus C=O und O(CH )₂₄ ;
l in einem molaren Verhältnis eine Zahl zwischen 0 und 7 ist; und
p ist in einem molaren Verhältnis eine Zahl zwischen 1 und 150.

2. - Die Reinigungszusammensetzung nach Anspruch 1, **dadurch gekennzeichnet, dass** es das Copolymer COPOL-1 umfasst, wobei die kationischen (Meth)acrylamidmonomere der Komponente a) ausgewählt sind aus der Gruppe bestehend aus Monomeren der Formel (IV) 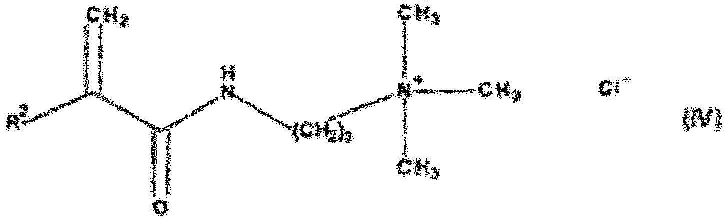 Wobei R² Wasserstoff oder Methyl ist.

3. - Die Reinigungszusammensetzung nach Anspruch 1, **dadurch gekennzeichnet, dass** sie das COPOL-1-Copolymer umfasst, wobei die kationischen (Meth)acrylamidmonomere der Komponente
a) ausgewählt sind aus der Gruppe bestehend aus Diallyldimethylammoniumchlorid und (3-Methacrylamidopropyl)trimethylammoniumchlorid.

4. Die Reinigungszusammensetzung nach Anspruch 1, **dadurch gekennzeichnet**, das sie das COPOL-1-Copolymer umfasst, wobei die Polyethylenglykol-Makromonomere der Komponente a) aus der Gruppe ausgewählt sind, die aus Monomeren der Formel (V)
H₂C=CR^{y}-W-O- (C₃H₆O)_{g}-(CH₂CH₂O)ₕ-H (V)
wobei R^{Y} ausgewählt ist aus der Gruppe bestehend aus H und Methyl;
W ist C=O oder O (CH₂)₄,
g in einem molaren Verhältnis eine Zahl zwischen 0 und 7 ist; und
h ist in einem molaren Verhältnis eine Zahl zwischen 1 und 150.

5. - Die Reinigungszusammensetzung nach Anspruch 4, **dadurch gekennzeichnet, dass** sie das COPOL-1-Copolymer umfasst, wobei in der Formel (V)
i) R^{Y} ist H, g ist 0 und h liegt in einem Molverhältnis zwischen 1 und 150 vor, wenn W gleich O(CH₂)₄ ist oder
ii) R^{Y} ist H oder Methyl, g liegt in einem molaren Verhältnis zwischen 1 und 7 und h liegt in einem molaren Verhältnis zwischen 1 und 150, wenn W gleih C=O ist.

6. - Die Reinigungszusammensetzung nach einem der Ansprüche 1 bis 5, **dadurch gekennzeichnet, dass** sie das COPOL-1-Copolymer umfasst, wobei die Polyethylenglykol-Makromonomere der Komponente b) ausgewählt sind aus der Gruppe bestehend aus Monomeren der Formel (V-A) 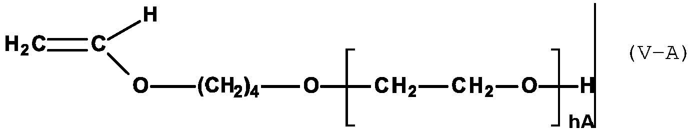
wobei hA in einem molaren Verhältnis einer Zahl zwischen 1 und 150 ist, und Monomere der Formel (V-B) 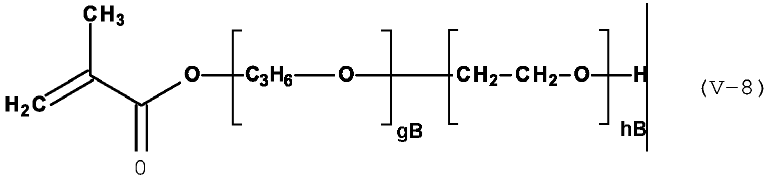
wobei gB in einem molaren Verhältnis eine Zahl zwischen 1 und 7 und hB in einem molaren Verhältnis eine Zahl zwischen 1 und 150 ist.

7. - Die Reinigungszusammensetzung nach einem der Ansprüche 1 bis 6, **dadurch gekennzeichnet, dass** sie das COPOL-1-Copolymer umfasst, wobei die neutralen Acrylamidmonomere der Komponente c) ausgewählt sind aus der Gruppe bestehend aus Monomeren der Formel (VI) 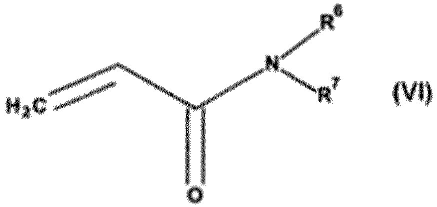 wobei R⁶ und R⁷ gleich oder verschieden sind und unabhängig voneinander ausgewählt werden aus der Gruppe bestehend aus H und einem aliphatischen Kohlenwasserstoff mit 1 bis 20 Kohlenstoffatomen.

8. - Die Reinigungszusammensetzung nach einem der Ansprüche 1 bis 7, **dadurch gekennzeichnet, dass** sie das COPOL-1-Copolymer umfasst, wobei die neutralen Acrylamidmonomere der Komponente c) ausgewählt sind aus der Gruppe bestehend aus Acrylamid, N-Ethylacrylamid, N,N-Dimethylacrylamid, N-tert-Butylacrylamid und N-Isopropylacrylamid.

9. Die Reinigungszusammensetzung nach einem der Ansprüche 1 bis 8, **dadurch gekennzeichnet, dass** sie das COPOL-1-Copolymer umfasst, das durch radikalische Polymerisation von mindestens den Komponenten a), b) und c) erhältlich ist, wobei bei der Copolymerisation die Komponente a) in einer Menge zwischen 25 und 80 Mol-%, die Komponente b) in einer Menge zwischen 0,1 und 4,4 Mol-% und die Komponente c) in einer Menge zwischen 15,6 und 74,9 Mol-% verwendet ist.

10. - Die Reinigungszusammensetzung nach Anspruch 1, **dadurch gekennzeichnet, dass** sie das COPOL-2-Copolymer umfasst, wobei die Struktureinheit a) das Polymerisationsprodukt von mindestens einer monomeren Spezies, ausgewählt aus der Gruppe bestehend aus [2-(Acryloyloxy)ethyl]trimethylammoniumchlorid, [2-(Acryloylamino)ethyl]trimethylammoniumchlorid, Methosulfat, [2-(Acryloyloxy)ethyl]trimethylammonium(methacryloyloxy)ethyl]trimeth ylammoniumchlorid oder Methosulfat, [3-(Acryloylamino)propyl]trimethylammoniumchlorid, [3-(Methacryloylamino)propyl]trimethylammoniumchlorid und Diallyldimethylammoniumchlorid (DADMAC).

11. - Die Reinigungszusammensetzung nach Anspruch 1, **dadurch gekennzeichnet, dass** sie das COPOL-2-Copolymer umfasst, wobei die makromonomeren Struktureinheiten (B) der Formel (III) durch Polymerisation von mindestens einer monomeren Spezies, ausgewählt aus der Gruppe bestehend aus Polyethylenglykolvinyloxybutylether, Polyethylenglykol-Co-Polypropylenglykol-Vinyloxybutylether, worin 1 in einem molaren Verhältnis eine Zahl zwischen 1 und 7 ist, Polyethylenglykol(meth)acrylat und Polyethylenglykol-Co-Polypropylenglykol(meth)acrylat, worin 1 in einem molaren Verhältnis eine Zahl zwischen 1 und 7 ist.

12. - Die Reinigungszusammensetzung nach einem der Ansprüche 1 oder 11, **dadurch gekennzeichnet, dass** sie das COPOL-2-Copolymer umfasst, wobei in den makromonomeren Struktureinheiten der Formel (III)
i) R^{x} ist H, 1 ist 0 und p ist in einem molaren Verhältnis eine Zahl zwischen 1 und 150, wenn Z O(CH2)4 ist, oder
ii) R^{x} gleich oder verschieden ist und ausgewählt ist aus der Gruppe bestehend aus H und Methyl, 1 in einem molaren Verhältnis eine Zahl zwischen 1 und 7 ist und p in einem molaren Verhältnis eine Zahl zwischen 1 und 150 ist, wenn Z C=O ist.

13. Die Reinigungszusammensetzung nach einem der Ansprüche 1, 11 oder 12, **dadurch gekennzeichnet, daß** sie das COPOL-2-Copolymer umfaßt, das ferner eine oder mehrere Struktureinheiten C) umfaßt, die sich von den Struktureinheiten A) und B) unterscheiden und das Produkt der Polymerisation von mindestens einer monomeren Spezies sind, die aus der Gruppe ausgewählt ist, die aus nicht-kationischen Acrylamiden, nicht-kationischen Methacrylamiden und N-Vinyl-substituierten Lactamen mit einem 5-7-atomigen Ringkern besteht.

14. Die Reinigungszusammensetzung nach Anspruch 13, **dadurch gekennzeichnet, dass** sie das COPOL-2-Copolymer umfasst, wobei die Monomereinheiten C) ausgewählt sind aus der Gruppe , bestehend aus Polymerisationsprodukten von mindestens einem N-Vinyl-substituierten Lactam mit einem 5-7-atomigen Ringkern und Struktureinheiten der allgemeinen Formel (VII) oder (VIII): 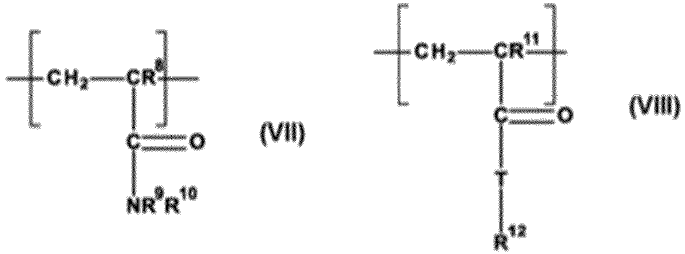
wobei R⁸ gleich oder verschieden ist und aus der Gruppe bestehend aus H und Methyl ausgewählt ist,
R⁹ und R¹⁰ sind jeweils gleich oder verschieden und unabhängig voneinander ausgewählt aus der Gruppe bestehend aus H, einem aliphatischen Kohlenwasserstoff mit 1 bis 20 Kohlenstoffatomen, einem cycloaliphatischen Kohlenwasserstoff mit 5 bis 20 Kohlenstoffatomen, einem Aryl mit 6 bis 14 Kohlenstoffatomen, einem Alkylaryl mit 7 bis 14 Kohlenstoffatomen, einem linearen oder verzweigten Monohydroxyalkyl mit 1 bis 5 Kohlenstoffatomen und einem Polyethylenglykol;
R¹¹ gleich oder verschieden ist und ausgewählt ist aus den Gruppe, bestehend aus H und Methyl,
T gleich oder verschieden ist und ausgewählt ist aus der Gruppe bestehend aus NH-(C Hⱼ₂ⱼ ) mit j=1, 2, 3 oder 4; und
R¹² gleich oder verschieden ist und ausgewählt ist aus der Gruppe bestehend aus OH, SO₃H, PO₃H₂, O-PO₃H₂ und para-substituiertem C₆H₄-SO₃H.

15. - Die Reinigungszusammensetzung nach Anspruch 13 oder 14, **dadurch gekennzeichnet, dass** sie das COPOL-2 copolymer umfasst, wobei die strukturellen Einheiten C) erhalten werden durch Polymerisation von wenigstens einer monomeren Spezies ausgewählt aus der Gruppe bestehend aus wherein said structural units C) are obtainable by polymerization of at least one monomeric species selected from the group consisting of Acrylamid, Methacrylamid, N-Methacrylamid, N,N-Dimethylacrylamid, N-Ethylacrylamid, N-Cyclohexylacrylamid, N-Benzylacrylamid, N-Methyloylacrylamid, N-Isopropylacrylamid und N-tert-Butylacrylamid.

16. Die Reinigungszusammensetzung nach einem der Ansprüche 13 bis 15, **dadurch gekennzeichnet, dass** sie das COPOL-1-Copolymer umfasst, das ferner eine oder mehrere Struktureinheiten D) umfasst, die aus der Gruppe ausgewählt sind, die aus Struktureinheiten der allgemeinen Formel (IX) oder (X) besteht: 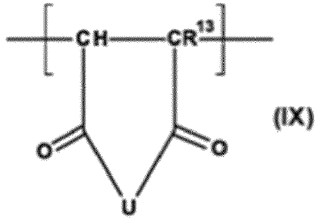
Wobei R¹³ gleich oder verschieden ist und aus der Gruppe bestehend aus H und Methyl ausgewählt ist,
U ist gleich oder verschieden und ist ausgewählt aus der Gruppe bestehend aus O und NH, 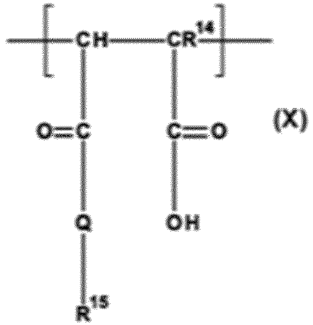
wobei R14 gleich oder verschieden ist und ausgewählt ist aus der Gruppe bestehend aus H und Methyl,
Q ist gleich oder verschieden und ausgewählt aus der gruppe bestehend aus O und NH,
R¹⁵ ist gleich oder verschieden und ausgewählt aus der Gruppe bestehend aus H, (Cₖ H2ₖ )-SO₃ H mit k=0, 1, 2, 3 oder 4; (C H₆₄ ) -SO₃ H; (C H₆₄ )-PO H₃₂ ; (C H₆₄ )-OPO H₃₂ und (C H )_{q2qe} -O (A'O)ᵣ -R¹⁶ mit q=0, 1, 2, 3 oder 4; e=0, 1, 2, 3 oder 4, A'=Cₓ , H_{2x'} con x ' =2, 3, 4 oder 5, r=eine ganze Zahl von 1 bis 350, und R¹⁶ ist gleich oder verschieden und ist ausgewählt aus der Gruppe bestehend aus einem linearen oder verzweigten Alkyl mit 1 bis 4 Kohlenstoffatomen.

## Revendications

1. Composition de détergent ayant un pH supérieur ou égal à 12, comprenant un hypohalogénite et un copolymère choisi dans le groupe consistant en COPOL-1 et COPOL-2 dans laquelle :
**COPOL-1** est un copolymère pouvant être obtenu par la copolymérisation d'au moins les composants a), b) et c), dans laquelle le copolymère **COPOL-1** comprend :
- 25,0 à 80 % en mole d'un ou de plusieurs monomères cationiques a) sélectionnés dans le groupe consistant en les monomères cationiques de (méth)acrylamide et de chlorure de diallyldiméthylammonium, et
- 0,1 à 50,0 % en mole d'un ou de plusieurs macromonomères de polyéthylèneglycol b), et
- 15,0 à 74,9 % en mole d'un ou de plusieurs monomères neutres d'acrylamide c) ;
et dans laquelle **COPOL-2** est un copolymère comprenant :
- 0,1 à 99,4 % en mole d'un ou de plusieurs motifs cationiques de structure (A) et
- 0,4 à 4,5 % en mole d'un ou de plusieurs motifs macromonomères de structure (B) ;
dans laquelle le motif cationique de structure (A) est représenté par les formules générales (I) et/ou (II) 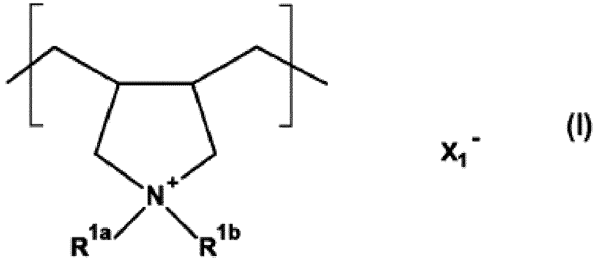 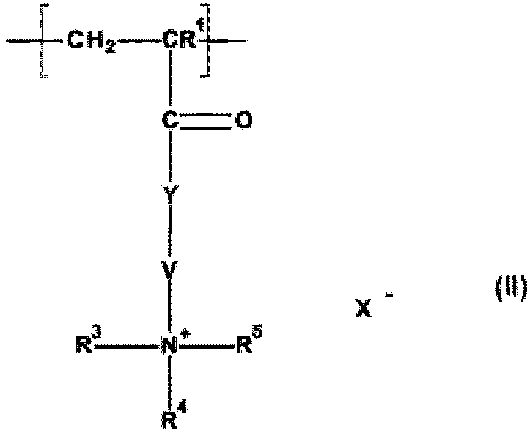
dans laquelle R¹ et R^{1a} sont identiques ou différents, et sélectionnés indépendamment parmi H et un méthyle ;
R^{1b}, R³, R⁴ et R⁵ sont identiques ou différents, et sélectionnés indépendamment dans le groupe consistant en H, un hydrocarbure aliphatique ayant 1 à 20 atomes de carbone, un hydrocarbure cycloaliphatique ayant 5 à 20 atomes de carbone, un aryle ayant 6 à 14 atomes de carbone et/ou un polyéthylèneglycol ;
Y est identique ou différent, et sélectionné dans le groupe consistant en O, NH et NR³ ;
V est identique ou différent, et sélectionné dans le groupe consistant en -(CH₂)ₓ- 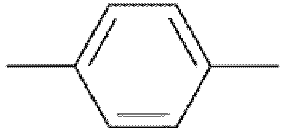 et 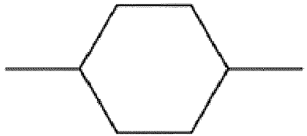
x est identique ou différent et c'est un nombre entier entre 1 et 6,
X et X₁ sont identiques ou différents, et choisis indépendamment dans le groupe consistant en un halogène, un sulfate d'alkyle en C₁₋₄ et un sulfonate d'alkyle en C1-4 ;
et dans laquelle le motif macromonomère de structure (B) est représenté par la formule (III) 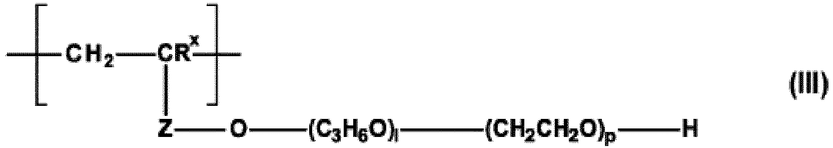
dans laquelle R^{x} est identique ou différent, et est sélectionné dans le groupe consistant en H et un méthyle ;
Z est identique ou différent, et sélectionné dans le groupe consistant en C=O et O(CH₂)₄ ;
l est, dans un rapport molaire, un nombre entre 0 et 7 ; et
p est, dans un rapport molaire, un nombre entre 1 et 150.

2. Composition de détergent selon la revendication 1,
**caractérisée en ce qu'**elle comprend le copolymère COPOL-1, dans laquelle lesdits monomères cationiques de (méth)acrylamide du composant a) sont sélectionnés dans le groupe consistant en les monomères de formule (IV) 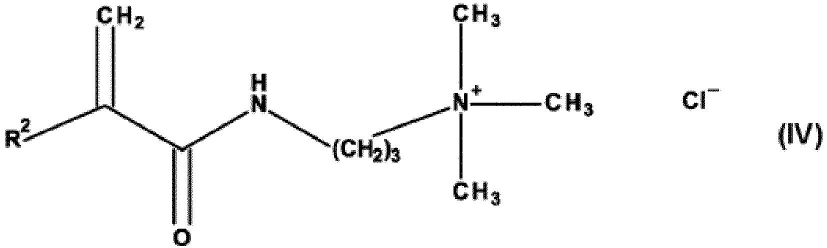
dans laquelle R² est un hydrogène ou un méthyle.

3. Composition de détergent selon la revendication 1, **caractérisée en ce qu'**elle comprend le copolymère COPOL-1, dans laquelle lesdits monomères cationiques de (méth)acrylamide du composant a) sont sélectionnés dans le groupe consistant en le chlorure de diallyldiméthylammonium et le chlorure de (3-méthacryl-amidopropyl)triméthylammonium.

4. Composition de détergent selon la revendication 1, **caractérisée en ce qu'**elle comprend le copolymère COPOL-1, dans laquelle lesdits macromonomères de polyéthylèneglycol du composant b) sont sélectionnés dans le groupe consistant en les monomères de formule (V)
H₂C=CR^{y}-W-O- (C₃H₆O)_{g}-(CH₂CH₂O)ₕ-H (V)
dans laquelle R^{y} est sélectionné dans le groupe consistant en H et un méthyle ;
W est C=O ou O(CH₂)₄,
g est, dans un rapport molaire, un nombre entre 0 et 7 ; et
h est, dans un rapport molaire, un nombre entre 1 et 150.

5. Composition de détergent selon la revendication 4, **caractérisée en ce qu'**elle comprend le copolymère COPOL-1, dans laquelle dans la formule (V) :
i) R^{y} est H, g est 0 et h, dans un rapport molaire, est entre 1 et 150, quand W est O(CH₂)₄ ou
ii) R^{y} est H ou un méthyle, g, dans un rapport molaire, est entre 1 et 7 et h, dans un rapport molaire, est entre 1 et 150 quand W est C=O.

6. Composition de détergent selon l'une quelconque des revendications 1 à 5, **caractérisée en ce qu'**elle comprend le copolymère COPOL-1, dans laquelle lesdits macromonomères de polyéthylèneglycol du composant b) sont sélectionnés dans le groupe consistant en les monomères de formule (V-A) 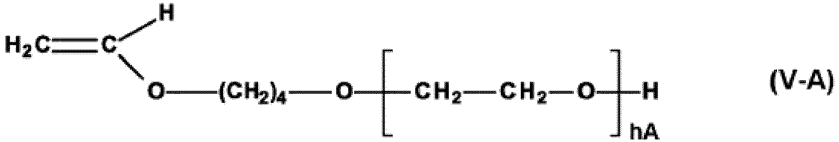
dans laquelle hA, dans un rapport molaire, est un nombre entre 1 et 150, et les monomères de formule (V-B) 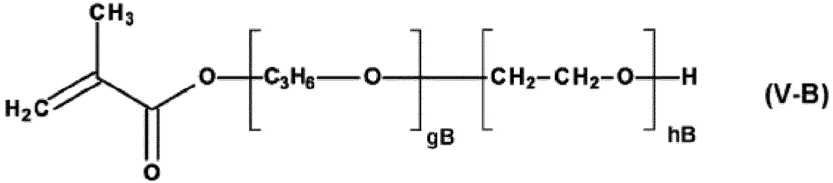
dans laquelle gB, dans un rapport molaire, est un nombre entre 1 et 7 et hB, dans un rapport molaire, est un nombre entre 1 et 150.

7. Composition de détergent selon l'une quelconque des revendications 1 à 6, **caractérisée en ce qu'**elle comprend le copolymère COPOL-1, dans laquelle lesdits monomères neutres d'acrylamide du composant c) sont sélectionnés dans le groupe consistant en les monomères de formule (VI) 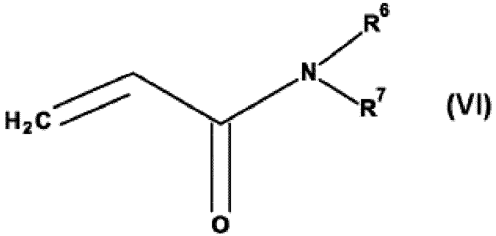 dans laquelle R⁶ et R⁷ sont identiques ou différents, et sélectionnés indépendamment dans le groupe consistant en H et un hydrocarbure aliphatique ayant 1 à 20 atomes de carbone.

8. Composition de détergent selon l'une quelconque des revendications 1 à 7, **caractérisée en ce qu'**elle comprend le copolymère COPOL-1, dans laquelle lesdits monomères neutres d'acrylamide du composant c) sont sélectionnés dans le groupe consistant en l'acrylamide, le N-éthylacrylamide, le N,N-diméthylacrylamide, le N-tert-butylacrylamide et le N-isopropylacrylamide.

9. Composition de détergent selon l'une quelconque des revendications 1 à 8, **caractérisée en ce qu'**elle comprend le copolymère COPOL-1 qui peut être obtenu par la polymérisation radicalaire d'au moins les composants a), b) et c), dans laquelle, dans la copolymérisation, ledit composant a) est utilisé en une quantité entre 25 et 80 % en mole, ledit composant b) est utilisé en une quantité entre 0,1 et 4,4 % en mole, et ledit composant c) est utilisé en une quantité entre 15,6 et 74,9 % en mole.

10. Composition de détergent selon la revendication 1, **caractérisée en ce qu'**elle comprend le copolymère COPOL-2, dans laquelle ledit motif de structure a) comprend le produit de polymérisation d'au moins une espèce monomère sélectionnée dans le groupe consistant en le chlorure de [2-(acryloyloxy)éthyl]-triméthylammonium, le chlorure de [2-(acryloylamino)-éthyl]triméthylammonium, le méthosulfate de [2-(acryloyloxy)éthyl]triméthylammonium, le chlorure ou méthosulfate de [2-(méthacryloyloxy)éthyl]triméthyl-ammonium, le chlorure de [3-(acryloylamino)propyl]-triméthylammonium, le chlorure de [3-(méthacryloyl-amino)propyl]triméthylammonium et le chlorure de diallyldiméthylammonium (DADMAC).

11. Composition de détergent selon la revendication 1, **caractérisée en ce qu'**elle comprend le copolymère COPOL-2, dans laquelle lesdits motifs macromonomères de structure (B) de formule (III) peuvent être obtenus par la polymérisation d'au moins une espèce monomère sélectionnée dans le groupe consistant en un polyéthylèneglycolvinyloxybutyléther, un polyéthylèneglycol-co-polypropylèneglycolvinyloxybutyléther, dans laquelle l, dans un rapport molaire, est un nombre entre 1 et 7, un (méth)acrylate de polyéthylèneglycol et un (méth)acrylate de polyéthylèneglycol-co-polypropylène-glycol, dans laquelle l, dans un rapport molaire, est un nombre entre 1 et 7.

12. Composition de détergent selon l'une quelconque des revendications 1 ou 11, **caractérisée en ce qu'**elle comprend le copolymère COPOL-2, dans laquelle dans lesdits motifs macromonomères de structure de formule (III) :
i) R^{x} est H, l est 0 et p, dans un rapport molaire, est un nombre entre 1 et 150, quand Z est O(CH₂)₄, ou
ii) R^{x} est identique ou différent, et est sélectionné dans le groupe consistant en H et un méthyle, l, dans un rapport molaire, est un nombre entre 1 et 7 et p, dans un rapport molaire, est un nombre entre 1 et 150, quand Z est C=O.

13. Composition de détergent selon l'une quelconque des revendications 1, 11 ou 12, **caractérisée en ce qu'**elle comprend le copolymère COPOL-2, comprenant en outre un ou plusieurs motifs de structure C) qui sont différents des motifs de structure A) et B), et sont le produit de la polymérisation d'au moins une espèce monomère sélectionnée dans le groupe consistant en les acrylamides non cationiques, les méthacrylamides non cationiques, et les lactames à substitution N-vinyle ayant un noyau cyclique de 5 à 7 atomes.

14. Composition de détergent selon la revendication 13, **caractérisée en ce qu'**elle comprend le copolymère COPOL-2 dans laquelle lesdits motifs monomères C) sont sélectionnées dans le groupe consistant en les produits de polymérisation d'au moins un lactame à substitution N-vinyle, ayant un noyau cyclique de 5 à 7 atomes, et de motifs de structure de formule générale (VII) ou (VIII) : 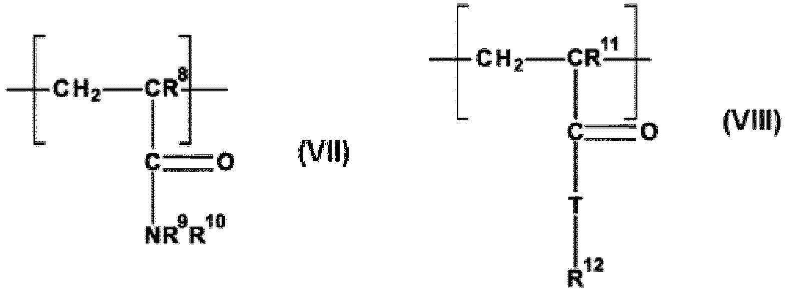
dans laquelle R⁸ est identique ou différent, et est sélectionné dans le groupe consistant en H et un méthyle,
R⁹ et R¹⁰ sont chacun identiques ou différents, et sélectionnés indépendamment dans le groupe consistant en H, un hydrocarbure aliphatique ayant 1 à 20 atomes de carbone, un hydrocarbure cycloaliphatique ayant 5 à 20 atomes de carbone, un aryle ayant 6 à 14 atomes de carbone, un alkylaryle ayant 7 à 14 atomes de carbone, un monohydroxyalkyle linéaire ou ramifié ayant 1 à 5 atomes de carbone, et un polyéthylèneglycol ;
R¹¹ est identique ou différent, et est sélectionné dans le groupe consistant en H et un méthyle,
T est identique ou différent, et est sélectionné dans le groupe consistant en NH-(CⱼH₂ⱼ) avec j = 1, 2, 3 ou 4 ; et
R¹² est identique ou différent, et est sélectionné dans le groupe consistant en OH, SO₃H, PO₃H₂, O-PO₃H₂ et C₆H₄-SO₃H substitué en para.

15. Composition de détergent selon la revendication 13 ou 14, **caractérisé en ce qu'**elle comprend le copolymère COPOL-2, dans laquelle lesdits motifs de structure C) peuvent être obtenus par la polymérisation d'au moins une espèce monomère sélectionnée dans le groupe consistant en l'acrylamide, le méthacrylamide, le N-méthacrylamide, le N,N-diméthyl-acrylamide, le N-éthylacrylamide, le N-cyclohexylacrylamide, le N-benzylacrylamide, le N-méthyloylacryl-amide, le N-isopropylacrylamide et le N-tert-butylacrylamide.

16. Composition de détergent selon l'une quelconque des revendications 13 à 15, **caractérisée en ce qu'**elle comprend le copolymère COPOL-2, comprenant en outre un ou plusieurs motifs de structure D) sélectionnés dans le groupe consistant en les motifs de structure ayant la formule générale (IX) ou (X) : 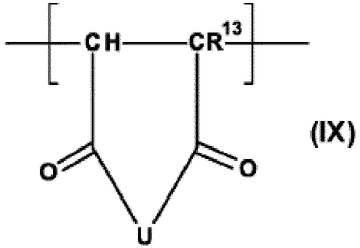
dans laquelle R¹³ est identique ou différent, et est sélectionné dans le groupe consistant en H et un méthyle,
U est identique ou différent, et est sélectionné dans le groupe consistant en O et NH, 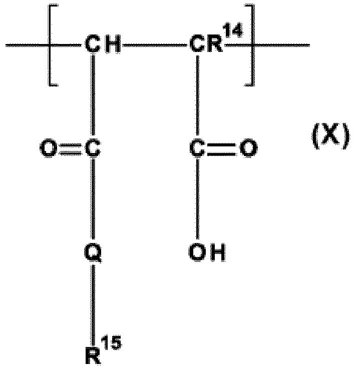
dans laquelle R¹⁴ est identique ou différent, et est sélectionné dans le groupe consistant en H et un méthyle,
Q est identique ou différent, et est sélectionné dans le groupe consistant en O et NH,
R¹⁵ est identique ou différent, et est choisi dans le groupe consistant en H, (CₖH₂ₖ)-SO₃H avec k = 0, 1, 2, 3 ou 4 ; (C₆H₄) -SO₃H ; (C₆H₄) -PO₃H₂ ; (C₆H₄)-OPO₃H₂ et (C_{q}H_{2q})ₑ-O(A'O) ᵣ-R¹⁶ avec q = 0, 1, 2, 3 ou 4 ; e = 0, 1, 2, 3 ou 4, A'=C_{x'}H_{2x'} avec x' = 2, 3, 4 ou 5, r = un nombre entier de 1 à 350, et R¹⁶ est identique ou différent, et est sélectionné dans le groupe consistant en un alkyle linéaire ou ramifié ayant 1 à 4 atomes de carbone.
